# EUROPEAN PATENT APPLICATION

(11) **EP 4 521 820 A1**
(43) Date of publication of application: **12.03.2025**
(21) Application number: 23814697.1
(22) Date of filing: 10.03.2023
(51) Int. Cl.: H04W 28/24

(54) **REFLECTIVE QUALITY OF SERVICE (QOS) METHOD, AND APPARATUS**

(30) Priority: 31.05.2022 CN 202210616277
(71) Applicant: Huawei Technologies Co., Ltd., Shenzhen, Guangdong 518129 (CN)
(72) Inventor: QIANG, Li, Shenzhen, Guangdong 518129 (CN); LIU, Nannan, Shenzhen, Guangdong 518129 (CN); CHANG, Junren, Shenzhen, Guangdong 518129 (CN); FAN, Qiang, Shenzhen, Guangdong 518129 (CN)
(74) Representative: Goddar, Heinz J.
(86) International application number: PCT/CN2023/080891
(87) International publication number: WO 2023/231499

(57) **Abstract**

A reflective quality of service QoS method and an apparatus are provided, to implement uplink layered QoS, and implement more refined uplink QoS management. The method includes: A terminal device determines to enable a first reflective QoS manner, and determines a first rule in the first reflective QoS manner. The first rule includes a QoS rule and/or a QoS flow to data radio bearer DRB mapping rule. The terminal device identifies classification information of a packet in the first reflective QoS manner, where the classification information is for distinguishing between packets in a same internet protocol IP flow.

## Description

This application claims priority to Chinese Patent Application No. 202210616277.1, filed with the China National Intellectual Property Administration on May 31, 2022 and entitled "REFLECTIVE QUALITY OF SERVICE QOS METHOD AND APPARATUS", which is incorporated herein by reference in its entirety.

### TECHNICAL FIELD

Embodiments of this application relate to the communication field, and in particular, to a reflective quality of service QoS method and an apparatus.

### BACKGROUND

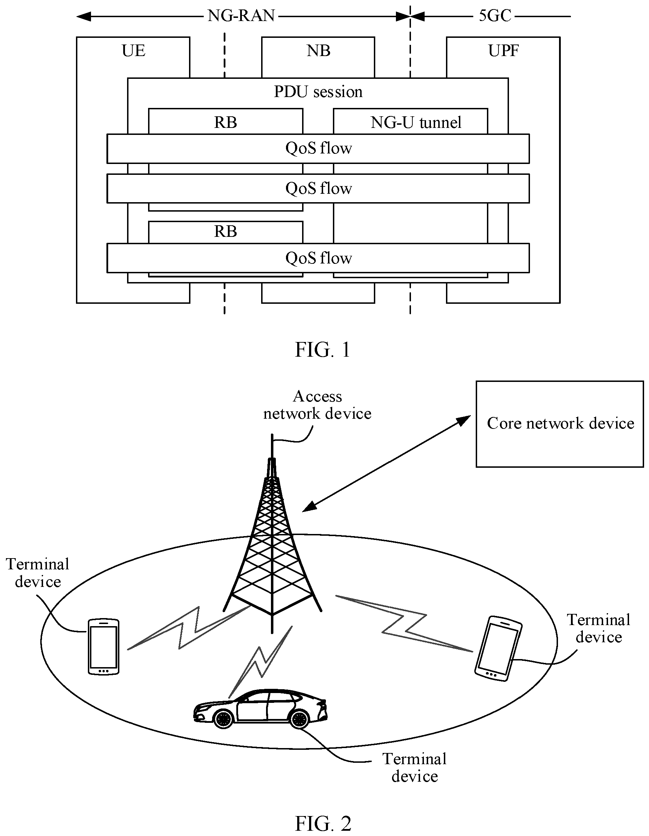

FIG. 1 is a diagram of a quality of service (quality of service, QoS) architecture of a 5th generation (5th generation, 5G) system. Data transmission is performed between user equipment (user equipment, UE) and a user plane function (user plane function, UPF) network element by using QoS flows (flows) in a protocol data unit (protocol data unit, PDU) session. Between the UE and a base station (base station, BS), the QoS flow may be mapped to a data radio bearer (data radio bearer, DRB). Between the BS and the UPF network element, the QoS flow may be mapped to a next generation user plane (next generation user plane, NG-U) tunnel (tunnel).

Generally, different QoS guarantees may be provided for different service flows based on the QoS architecture shown in FIG. 1. For example, for downlink packets, a network may map packets with different QoS requirements to different QoS flows (flows) and/or map the packets with different QoS requirements to different data radio bearers (data radio bearers, DRBs).

For an uplink packet, the UE may map the packet to a QoS flow according to a QoS rule (rule), and/or map the QoS flow to a DRB according to a QoS flow to DRB mapping rule, where the rules are internally maintained by the UE. The QoS rule and the QoS flow to DRB mapping rule that are maintained by the UE may be configured by the network by using signaling, or may be self-learned by the UE in a reflective QoS (reflective QoS) manner.

However, an existing conventional reflective QoS manner is applicable to a scenario in which packets in a same internet protocol (internet protocol, IP) flow are mapped to a same QoS flow and/or DRB. When the packets in the same IP flow are mapped to different QoS flows and/or DRBs, the conventional reflective QoS manner may no longer be applicable.

### SUMMARY

This application provides a reflective quality of service QoS method and an apparatus, to implement uplink layered QoS, and implement more refined uplink QoS management.

According to a first aspect, a reflective quality of service QoS method is provided. The method may be performed by a terminal device, may be performed by a component of the terminal device, for example, a processor, a chip, or a chip system of the terminal device, or may be implemented by a logical module or software that can implement all or a part of functions of the terminal device. The method includes: The terminal device determines to enable a first reflective QoS manner, and determines a first rule in the first reflective QoS manner. The first rule includes a QoS rule and/or a QoS flow to data radio bearer DRB mapping rule. The terminal device identifies classification information of a packet in the first reflective QoS manner, where the classification information is for distinguishing between packets in a same internet protocol IP flow.

According to the solution, the terminal device may enable the first reflective QoS manner, and determine the first rule, for example, the QoS rule and/or the QoS flow to DRB mapping rule, in the first reflective QoS manner. The terminal device may identify the classification information of the packet in the first reflective QoS manner. The classification information may be for distinguishing between the packets in the same IP flow. Therefore, when performing reflective QoS in the first reflective QoS manner, the terminal device can distinguish between the packets in the same IP flow. In this way, downlink layered QoS is identified, and a corresponding uplink layered QoS rule is determined according to a downlink layered QoS rule, to implement uplink layered QoS, implement more refined uplink QoS management, and improve transmission flexibility.

In a possible design, a parameter in the first rule includes the classification information, or the first rule corresponds to one or more types of packets in the same IP flow.

Based on the possible design, the parameter in the first rule includes the classification information, or the first rule corresponds to the one or more types of packets in the same IP flow, so that the terminal device can map, according to the first rule, the packets in the same IP flow to different QoS flows and/or DRBs for transmission, to implement uplink layered QoS.

In a possible design, the method further includes: receiving first indication information and/or second indication information from a network device. The first indication information indicates to notify a non-access stratum NAS of an update of a service data flow SDF to QoS flow mapping rule. The second indication information indicates to update the QoS flow to DRB mapping rule.

Based on the possible design, the terminal device can determine, based on the first indication information, that the terminal device needs to update the SDF to QoS flow mapping rule, or determine, based on the second indication information, that the terminal device needs to update the QoS flow to DRB mapping rule, so that the terminal device performs reflective QoS.

In a possible design, the determining to enable a first reflective QoS manner includes: determining, based on a first packet from the network device, to enable the first reflective QoS manner.

In a possible design, the first packet includes third indication information. The third indication information indicates the terminal device to determine the first rule in the first reflective QoS manner, and/or the third indication information indicates that the first packet is a packet of a first QoS type.

Based on the foregoing two possible designs, that the terminal device determines the first rule in the first reflective QoS manner may be explicitly indicated by a data plane, to reduce complexity of determining, by the terminal device, whether to enable the first reflective QoS manner.

In a possible design, a value of an information element associated with the first packet is a specific value, and the information element includes at least one of the following: a QoS flow identifier QFI, a DRB identifier, a network slice identifier, a data network name, a logical channel identifier, a logical channel group identifier, or an IP flow identifier.

Based on the possible design, the terminal device may determine, depending on whether a value associated with a packet is a specific value, whether to enable the first reflective QoS manner.

In a possible design, the determining to enable a first reflective QoS manner includes: determining, based on fourth indication information from the network device, to enable the first reflective QoS manner, where the fourth indication information indicates the terminal device to determine the first rule for a first information element in the first reflective QoS manner, and the information element includes at least one of the following: a QFI, a DRB identifier, a network slice identifier, a data network name, a logical channel identifier, a logical channel group identifier, or an IP flow identifier.

In a possible design, the fourth indication information includes a first field and a second field, the first field is for carrying the first information element, and the second field indicates the terminal device to determine the first rule in the first reflective QoS manner, or
the fourth indication information includes a third field, the third field is for carrying the first information element, and the third field further indicates the terminal device to determine the first rule in the first reflective QoS manner; or
the fourth indication information includes a fourth field, and the fourth field indicates the terminal device to determine the first rule in the first reflective QoS manner.

In a possible design, the fourth indication information is carried in at least one of the following: a service data adaptation protocol SDAP control protocol data unit PDU, a media access control control element MAC CE, downlink control information DCI, a non-access stratum NAS message, a radio resource control RRC message, a packet data convergence protocol PDCP control PDU, or other signaling or another control element.

In a possible design, the classification information includes at least one of the following: a type of the packet, an importance level of the packet, a flag bit indicating whether to allow discarding of the packet, a type of a PDU set to which the packet belongs, an importance level of the PDU set to which the packet belongs, or a flag bit indicating whether to allow discarding of the PDU set to which the packet belongs.

In a possible design, the classification information of the packet is carried in the packet.

In a possible design, the method further includes: sending a second packet to the network device according to a second rule, where the second rule includes at least one of the following: An important packet is repeatedly sent for a plurality of times, important information is carried in first N packets or last M packets of the PDU set, or an important packet includes fifth indication information, where the fifth indication information indicates the network device to reply whether the important packet is correctly received, and N and M are positive integers.

Based on the possible design, a transmit end may repeatedly send the important packet for a plurality of times according to the second rule. Compared with sending the important packet once, this can improve transmission reliability of the important packet. Alternatively, a transmit end may include the important information in the first N packets or the last M packets of the PDU set according to the second rule, to improve transmission reliability of the important information. Alternatively, a transmit end may include the fifth indication information in the important packet according to the second rule, to indicate a receive end to feed back whether the important packet is correctly received. When the receive end feeds back that the important packet is not correctly received, the important packet may be retransmitted in time, to improve transmission reliability of the important packet.

In a possible design, the important packet includes at least one of the following: a 1 ^{st} packet of a PDU set, a last packet of the PDU set, a packet carrying a PDU set boundary indication, a packet carrying a total size of the PDU set, a packet that is not allowed to be discarded, or a packet carrying important information.

In a possible design, the important information includes at least one of the following: information indicating the total size of the PDU set, number information of the PDU set, a type identifier of the PDU set, information indicating a PDU set boundary, or information indicating an association relationship between a plurality of PDU sets.

Based on the foregoing two possible designs, the important packet and/or the important information can assist a receiver in correctly receiving a packet of the PDU set or correctly receiving a plurality of PDU sets, to improve overall transmission reliability of a service.

According to a second aspect, a reflective quality of service QoS method is provided. The method may be performed by a network device, may be performed by a component of the network device, for example, a processor, a chip, or a chip system of the network device, or may be implemented by a logical module or software that can implement all or a part of functions of the network device. The method includes: The network device generates a first packet, and sends the first packet to a terminal device. The first packet includes third indication information. The third indication information indicates the terminal device to determine a first rule in a first reflective QoS manner, and/or the third indication information indicates that the first packet is a packet of a first QoS type. The first rule includes a QoS rule and/or a QoS flow to DRB mapping rule, the first reflective QoS manner indicates the terminal device to identify classification information of a packet, and the classification information is for distinguishing between packets in a same internet protocol IP flow.

According to the solution, the network device may indicate, by using the third indication information, the terminal device to determine the first rule, for example, the QoS rule and/or the QoS flow to DRB mapping rule, in the first reflective QoS manner. The terminal device may identify the classification information of the packet in the first reflective QoS manner, and the classification information may be for distinguishing between the packets in the same IP flow. Therefore, based on an indication of the network device, when performing reflective QoS in the first reflective QoS manner, the terminal device can distinguish between the packets in the same IP flow. In this way, downlink layered QoS is identified, and a corresponding uplink layered QoS rule is determined according to a downlink layered QoS rule, to implement uplink layered QoS, implement more refined uplink QoS management, and improve transmission flexibility.

According to a third aspect, a reflective quality of service QoS method is provided. The method may be performed by a network device, may be performed by a component of the network device, for example, a processor, a chip, or a chip system of the network device, or may be implemented by a logical module or software that can implement all or a part of functions of the network device. The method includes: The network device generates fourth indication information, and sends the fourth indication information to a terminal device. The fourth indication information indicates the terminal device to determine a first rule for a first information element in a first reflective QoS manner.

The first rule includes a QoS rule and/or a QoS flow to DRB mapping rule, the first reflective QoS manner indicates the terminal device to identify classification information of a packet, and the classification information is for distinguishing between packets in a same internet protocol IP flow. The information element includes at least one of the following: a QFI, a DRB identifier, a network slice identifier, a data network name, a logical channel identifier, a logical channel group identifier, or an IP flow identifier.

According to the solution, the network device may indicate, by using the fourth indication information, the terminal device to determine the first rule, for example, the QoS rule and/or the QoS flow to DRB mapping rule, for the first information element in the first reflective QoS manner. The terminal device may identify the classification information of the packet in the first reflective QoS manner, and the classification information may be for distinguishing between the packets in the same IP flow. Therefore, based on an indication of the network device, when performing reflective QoS for the first information element in the first reflective QoS manner, the terminal device can distinguish between the packets in the same IP flow. In this way, downlink layered QoS is identified, and a corresponding uplink layered QoS rule is determined according to a downlink layered QoS rule, to implement uplink layered QoS, implement more refined uplink QoS management, and improve transmission flexibility.

In a possible design, the fourth indication information includes a first field and a second field, the first field is for carrying the first information element, and the second field indicates the terminal device to determine the first rule in the first reflective QoS manner; or
the fourth indication information includes a third field, the third field is for carrying the first information element, and the third field further indicates the terminal device to determine the first rule in the first reflective QoS manner; or
the fourth indication information includes a fourth field, and the fourth field indicates the terminal device to determine the first rule in the first reflective QoS manner.

In a possible design, the fourth indication information is carried in at least one of the following: a service data adaptation protocol SDAP control protocol data unit PDU, a media access control control element MAC CE, downlink control information DCI, a non-access stratum NAS message, a radio resource control RRC message, a PDCP control PDU, or other signaling or another control element.

With reference to the second aspect or the third aspect, in a possible design, the classification information includes at least one of the following: a type of the packet, an importance level of the packet, a flag bit indicating whether to allow discarding of the packet, a type of a PDU set to which the packet belongs, an importance level of the PDU set to which the packet belongs, or a flag bit indicating whether to allow discarding of the PDU set to which the packet belongs.

With reference to the second aspect or the third aspect, in a possible design, the classification information of the packet is carried in the packet.

With reference to the second aspect or the third aspect, in a possible design, the method further includes: receiving a second packet from the terminal device, where the second packet includes fifth indication information, and the fifth indication information indicates the network device to reply whether the second packet is correctly received; and sending sixth indication information to the terminal device, where the sixth indication information indicates that the second packet is correctly received.

For technical effects brought by any possible design in the second aspect or the third aspect, refer to the technical effects brought by a corresponding design in the first aspect. Details are not described herein again.

According to a fourth aspect, a reflective quality of service QoS method is provided. The method may be performed by a terminal device, may be performed by a component of the terminal device, for example, a processor, a chip, or a chip system of the terminal device, or may be implemented by a logical module or software that can implement all or a part of functions of the terminal device. The method includes: receiving a first packet; and if the first packet includes third indication information, determining a first rule in a first reflective QoS manner. The third indication information indicates the terminal device to determine the first rule in the first reflective QoS manner, and/or indicates that the first packet is a packet of a first QoS type. The first rule includes a QoS rule and/or a QoS flow to DRB mapping rule. The terminal device identifies classification information of a packet in the first reflective QoS manner, where the classification information is for distinguishing between packets in a same IP flow.

According to the solution, the terminal device determines the first rule, for example, the QoS rule and/or the QoS flow to DRB mapping rule, based on an indication of a network device in the first reflective QoS manner. The terminal device may identify the classification information of the packet in the first reflective QoS manner. The classification information may be for distinguishing between the packets in the same IP flow. Therefore, when performing reflective QoS in the first reflective QoS manner, the terminal device can distinguish between the packets in the same IP flow. In this way, downlink layered QoS is identified, and a corresponding uplink layered QoS rule is determined according to a downlink layered QoS rule, to implement uplink layered QoS, implement more refined uplink QoS management, and improve transmission flexibility.

According to a fifth aspect, a reflective quality of service QoS method is provided. The method may be performed by a terminal device, may be performed by a component of the terminal device, for example, a processor, a chip, or a chip system of the terminal device, or may be implemented by a logical module or software that can implement all or a part of functions of the terminal device. The method includes: receiving a first packet; and if a value of an information element associated with the first packet is a specific value, determining a first rule in a first reflective QoS manner. The first rule includes a QoS rule and/or a QoS flow to DRB mapping rule. The terminal device identifies classification information of a packet in the first reflective QoS manner, where the classification information is for distinguishing between packets in a same IP flow. The information element includes at least one of the following: a QoS flow identifier QFI, a DRB identifier, a network slice identifier, a data network name, a logical channel identifier, a logical channel group identifier, or an IP flow identifier.

According to the solution, the terminal device may determine the first rule, for example, the QoS rule and/or the QoS flow to DRB mapping rule, in the first reflective QoS manner. The terminal device may identify the classification information of the packet in the first reflective QoS manner. The classification information may be for distinguishing between the packets in the same IP flow. Therefore, when performing reflective QoS in the first reflective QoS manner, the terminal device can distinguish between the packets in the same IP flow. In this way, downlink layered QoS is identified, and a corresponding uplink layered QoS rule is determined according to a downlink layered QoS rule, to implement uplink layered QoS, implement more refined uplink QoS management, and improve transmission flexibility.

According to a sixth aspect, a reflective quality of service QoS method is provided. The method may be performed by a terminal device, may be performed by a component of the terminal device, for example, a processor, a chip, or a chip system of the terminal device, or may be implemented by a logical module or software that can implement all or a part of functions of the terminal device. The method includes: receiving a first packet; and if an information element associated with the first packet is a first information element, determining a first rule in a first reflective QoS manner. The first rule includes a QoS rule and/or a QoS flow to DRB mapping rule. The terminal device identifies classification information of a packet in the first reflective QoS manner, where the classification information is for distinguishing between packets in a same IP flow. The information element includes at least one of the following: a QoS flow identifier QFI, a DRB identifier, a network slice identifier, a data network name, a logical channel identifier, a logical channel group identifier, or an IP flow identifier.

According to the solution, the terminal device determines the first rule, for example, the QoS rule and/or the QoS flow to DRB mapping rule, based on an indication of a network device in the first reflective QoS manner. The terminal device may identify the classification information of the packet in the first reflective QoS manner. The classification information may be for distinguishing between the packets in the same IP flow. Therefore, when performing reflective QoS in the first reflective QoS manner, the terminal device can distinguish between the packets in the same IP flow. In this way, downlink layered QoS is identified, and a corresponding uplink layered QoS rule is determined according to a downlink layered QoS rule, to implement uplink layered QoS, implement more refined uplink QoS management, and improve transmission flexibility.

In a possible design, the method further includes: receiving fourth indication information from the network device, where the fourth indication information indicates the terminal device to determine the first rule for the first information element in the first reflective QoS manner.

According to a seventh aspect, a communication apparatus is provided to implement various methods. The communication apparatus may be the terminal device in the first aspect, the fourth aspect, the fifth aspect, or the sixth aspect, or an apparatus included in the terminal device, for example, a chip or a chip system. Alternatively, the communication apparatus may be the network device in the second aspect or the third aspect, or an apparatus included in the network device, for example, a chip or a chip system. When the apparatus is the chip system, the apparatus may include a chip, or may include the chip and another discrete component.

The communication apparatus includes a corresponding module, unit, or means (means) for implementing the method. The module, unit, or means may be implemented by hardware, software, or hardware executing corresponding software. The hardware or software includes one or more modules or units corresponding to a function.

In some possible designs, the communication apparatus may include a processing module. Further, the communication apparatus may further include a transceiver module. The processing module may be configured to implement a processing function in any one of the foregoing aspects and the possible implementations of the foregoing aspects. The transceiver module may also be referred to as a transceiver unit, and is configured to implement a sending function and/or a receiving function in any one of the foregoing aspects and the possible implementations of the foregoing aspects. The transceiver module may include a transceiver circuit, a transceiver machine, a transceiver, or a communication interface.

In some possible designs, the transceiver module includes a sending module and/or a receiving module, respectively configured to implement the sending function or the receiving function in any one of the foregoing aspects and the possible implementations of the foregoing aspects.

When the communication apparatus is the terminal device in the first aspect or the apparatus included in the terminal device,
the processing module is configured to determine to enable a first reflective QoS manner, the processing module is further configured to determine a first rule in the first reflective QoS manner, where the first rule includes a QoS rule and/or a QoS flow to data radio bearer DRB mapping rule; and the processing module is further configured to identify classification information of a packet in the first reflective QoS manner, where the classification information is for distinguishing between packets in a same internet protocol IP flow.

Optionally, the transceiver module is configured to receive first indication information and/or second indication information from a network device. The first indication information indicates to notify a non-access stratum NAS of an update of a service data flow SDF to QoS flow mapping rule, and the second indication information indicates to update the QoS flow to DRB mapping rule.

Optionally, that the processing module is further configured to determine to enable a first reflective QoS manner includes: determining, based on a first packet from the network device, to enable the first reflective QoS manner.

Optionally, that the processing module is further configured to determine to enable a first reflective QoS manner includes: The processing module is configured to determine, based on fourth indication information from the network device, to enable the first reflective QoS manner, where the fourth indication information indicates the terminal device to determine the first rule for a first information element in the first reflective QoS manner, and the information element includes at least one of the following: a QFI, a DRB identifier, a network slice identifier, a data network name, a logical channel identifier, a logical channel group identifier, or an IP flow identifier.

Optionally, the transceiver module is further configured to send a second packet to the network device according to a second rule, where the second rule includes at least one of the following: An important packet is repeatedly sent for a plurality of times, important information is carried in first N packets or last M packets of a PDU set, or an important packet includes fifth indication information, where the fifth indication information indicates the network device to reply whether the important packet is correctly received, and N and M are positive integers.

When the communication apparatus is the terminal device in the fourth aspect or the apparatus included in the terminal device,
the transceiver module is configured to receive a first packet, and the processing module is configured to: when the first packet includes third indication information, determine a first rule in a first reflective QoS manner. The third indication information indicates the terminal device to determine the first rule in the first reflective QoS manner, and/or indicates that the first packet is a packet of a first QoS type. The first rule includes a QoS rule and/or a QoS flow to DRB mapping rule. The terminal device identifies classification information of a packet in the first reflective QoS manner, where the classification information is for distinguishing between packets in a same IP flow.

When the communication apparatus is the terminal device in the fifth aspect or the apparatus included in the terminal device,
the transceiver module is configured to receive a first packet, and the processing module is configured to: when a value of an information element associated with the first packet is a specific value, determine a first rule in a first reflective QoS manner. The first rule includes a QoS rule and/or a QoS flow to DRB mapping rule. The terminal device identifies classification information of a packet in the first reflective QoS manner, where the classification information is for distinguishing between packets in a same IP flow. The information element includes at least one of the following: a QoS flow identifier QFI, a DRB identifier, a network slice identifier, a data network name, a logical channel identifier, a logical channel group identifier, or an IP flow identifier.

When the communication apparatus is the terminal device in the sixth aspect or the apparatus included in the terminal device,
the transceiver module is configured to receive a first packet, and the processing module is configured to: when an information element associated with the first packet is a first information element, determine a first rule in a first reflective QoS manner. The first rule includes a QoS rule and/or a QoS flow to DRB mapping rule. The terminal device identifies classification information of a packet in the first reflective QoS manner, where the classification information is for distinguishing between packets in a same IP flow. The information element includes at least one of the following: a QoS flow identifier QFI, a DRB identifier, a network slice identifier, a data network name, a logical channel identifier, a logical channel group identifier, or an IP flow identifier.

Optionally, the transceiver module is further configured to receive fourth indication information from a network device, where the fourth indication information indicates the terminal device to determine the first rule for the first information element in the first reflective QoS manner.

When the communication apparatus is the network device in the second aspect or the apparatus included in the network device,
the processing module is configured to generate a first packet, and the transceiver module is configured to send the first packet to a terminal device, where the first packet includes third indication information. The third indication information indicates the terminal device to determine a first rule in a first reflective QoS manner, and/or the third indication information indicates that the first packet is a packet of a first QoS type. The first rule includes a QoS rule and/or a QoS flow to DRB mapping rule, the first reflective QoS manner indicates the terminal device to identify classification information of a packet, and the classification information is for distinguishing between packets in a same internet protocol IP flow.

When the communication apparatus is the network device in the third aspect or the apparatus included in the network device,
the processing module is configured to generate fourth indication information, and the transceiver module is configured to send the fourth indication information to a terminal device, where the fourth indication information indicates the terminal device to determine a first rule for a first information element in a first reflective QoS manner, the first rule includes a QoS rule and/or a QoS flow to DRB mapping rule, the first reflective QoS manner indicates the terminal device to identify classification information of a packet, and the classification information is for distinguishing between packets in a same internet protocol IP flow. The information element includes at least one of the following: a QFI, a DRB identifier, a network slice identifier, a data network name, a logical channel identifier, a logical channel group identifier, or an IP flow identifier.

According to an eighth aspect, a communication apparatus is provided, including a processor and a communication interface. The communication interface is configured to communicate with a module other than the communication apparatus. The processor is configured to execute a computer program or instructions, so that the communication apparatus performs the method in any one of the aspects. The communication apparatus may be the terminal device in the first aspect, the fourth aspect, the fifth aspect, or the sixth aspect, or an apparatus included in the terminal device, for example, a chip or a chip system. Alternatively, the communication apparatus may be the network device in the second aspect or the third aspect, or an apparatus included in the network device, for example, a chip or a chip system. When the apparatus is the chip system, the apparatus may include a chip, or may include the chip and another discrete component.

According to a ninth aspect, a communication apparatus is provided, including at least one processor. The processor is configured to execute a computer program or instructions stored in a memory, so that the communication apparatus performs the method in any one of the aspects. The memory may be coupled to the processor, or the memory may exist independently of the processor. For example, the memory and the processor are two independent modules. The memory may be located outside or inside the communication apparatus.

The communication apparatus may be the terminal device in the first aspect, the fourth aspect, the fifth aspect, or the sixth aspect, or an apparatus included in the terminal device, for example, a chip or a chip system. Alternatively, the communication apparatus may be the network device in the second aspect or the third aspect, or an apparatus included in the network device, for example, a chip or a chip system. When the apparatus is the chip system, the apparatus may include a chip, or may include the chip and another discrete component.

According to a tenth aspect, a computer-readable storage medium is provided. The computer-readable storage medium stores a computer program or instructions, and when the computer program or the instructions are run on a communication apparatus, the communication apparatus is enabled to perform the method in any one of the aspects.

According to an eleventh aspect, a computer program product including instructions is provided. When the computer program product runs on a communication apparatus, the communication apparatus is enabled to perform the method in any one of the aspects.

It may be understood that, when the communication apparatus provided in any one of the seventh aspect to the eleventh aspect is a chip, a sending action/function of the communication apparatus may be understood as outputting information, and a receiving action/function of the communication apparatus may be understood as inputting information.

For technical effects brought by any design manner of the seventh aspect to the eleventh aspect, refer to the technical effects brought by different design manners of the first aspect to the sixth aspect. Details are not described herein again.

According to a twelfth aspect, a communication system is provided. The communication system includes the terminal device in the foregoing aspects and the network device in the foregoing aspects.

### BRIEF DESCRIPTION OF DRAWINGS

FIG. 1 is a schematic of a QoS architecture of a 5G system according to this application;
FIG. 2 is a diagram of a structure of a communication system according to this application;
FIG. 3 is a diagram of a structure of a communication apparatus according to this application;
FIG. 4a is a diagram of a frame structure according to this application;
FIG. 4b is a diagram of transmitting a service by using QFIs and DRBs according to this application;
FIG. 5 is a schematic flowchart of a reflective QoS method according to this application;
FIG. 6 is another diagram of transmitting a service by using QFIs and DRBs according to this application;
FIG. 7 is a diagram of a structure of an SDAP layer PDU according to this application;
FIG. 8 is a diagram of a structure of another SDAP layer PDU according to this application;
FIG. 9 is a diagram of a structure of still another SDAP layer PDU according to this application;
FIG. 10 is a schematic flowchart of application of a reflective QoS method according to this application;
FIG. 11 is a diagram of a structure of a terminal device according to this application;
FIG. 12 is a diagram of a structure of a network device according to this application; and
FIG. 13 is a diagram of a structure of another communication apparatus according to this application.

### DESCRIPTION OF EMBODIMENTS

In the descriptions of this application, unless otherwise specified, the character "/" indicates that associated objects are in an "or" relationship. For example, A/B may represent A or B. The term "and/or" in this application merely describes an association relationship between associated objects and indicates that three relationships may exist. For example, A and/or B may represent three cases: Only A exists, both A and B exist, or only B exists, where A and B may be singular or plural.

In the descriptions of this application, "a plurality of" means two or more than two unless otherwise specified. "At least one of the following items (pieces)" or an expression similar thereto means any combination of these items, including a singular item (piece) or any combination of plural items (pieces). For example, at least one of a, b, or c may indicate: a, b, c, a and b, a and c, b and c, or a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

In embodiments of this application, the word such as "example" or "for example" represents giving an example, an illustration, or a description. Any embodiment or design scheme described as an "example" or "for example" in embodiments of this application should not be explained as being more preferred or having more advantages than another embodiment or design scheme. Exactly, use of the word such as "example" or "for example" is intended to present a related concept in a specific manner for ease of understanding.

It may be understood that an "embodiment" mentioned in the entire specification means that particular features, structures, or characteristics related to the embodiment are included in at least one embodiment of this application. Therefore, embodiments in the entire specification are not necessarily a same embodiment. In addition, these particular features, structures, or characteristics may be combined in one or more embodiments in any suitable manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

It may be understood that in some scenarios, some optional features in embodiments of this application may be independently implemented without depending on another feature, for example, a solution on which the optional features are currently based, to resolve a corresponding technical problem and achieve a corresponding effect. Alternatively, in some scenarios, the optional features may be combined with another feature based on a requirement. Correspondingly, the apparatus provided in embodiments of this application may also correspondingly implement these features or functions. Details are not described herein.

In this application, unless otherwise specified, for same or similar parts in embodiments, refer to each other. In embodiments of this application, unless otherwise specified or a logical conflict occurs, terms and/or descriptions in different embodiments are consistent and may be referenced by each other, and different embodiments may be combined based on internal logical relationships between the embodiments to form a new embodiment. The following implementations of this application are not intended to limit the protection scope of this application.

The technical solutions provided in this application may be applied to various communication systems. The communication system may be a 3rd generation partnership project (3rd generation partnership project, 3GPP) communication system, for example, a 4th generation (4th generation, 4G) long term evolution (long term evolution, LTE) system, a 5th generation (5th generation, 5G) new radio (new radio, NR) system, a vehicle to everything (vehicle to everything, V2X) system, an LTE-NR hybrid networking system, a device to device (device to device, D2D) system, a machine to machine (machine to machine, M2M) communication system, an internet of things (internet of things, IoT), or another next-generation communication system. Alternatively, the communication system may be a non-3GPP communication system. This is not limited.

The communication system applicable to this application is merely an example for description, and a communication system applicable to this application is not limited thereto. This is uniformly described herein, and details are not described below again.

For example, this application provides a communication system to which the solutions of this application are applicable. The communication system includes a network device and at least one terminal device.

Refer to FIG. 2. In a possible implementation, the network device may be an access network device. In this case, optionally, the communication system may further include a core network device.

In another possible implementation, the network device may be a core network device. In this case, the communication system may further include an access network device.

Optionally, the terminal device may access a DN or perform service data transmission by using a protocol data unit (protocol data unit, PDU) session (PDU session) from the terminal device via the access network device and the core network device to the data network (data network, DN).

Optionally, the terminal device may be a device having a wireless transceiver function. The terminal device may also be referred to as user equipment (user equipment, UE), a terminal, an access terminal, a subscriber unit, a subscriber station, a mobile station (mobile station, MS), a remote station, a remote terminal, a mobile terminal (mobile terminal, MT), a user terminal, a wireless communication device, a user agent, a user apparatus, or the like. The terminal may be, for example, a wireless terminal in an IoT, V2X, D2D, M2M, a 5G network, or a future evolved PLMN. The terminal device may be deployed on land, including an indoor device, an outdoor device, a handheld device, or a vehicle-mounted device, may be deployed on water (such as a ship), or may be deployed in air (for example, on an airplane, a balloon, or a satellite).

For example, the terminal device may be an uncrewed aerial vehicle, an IoT device (for example, a sensor, an electricity meter, or a water meter), a V2X device, a station (station, ST) in a wireless local area network (wireless local area network, WLAN), a cellular phone, a cordless phone, a session initiation protocol (session initiation protocol, SIP) phone, a wireless local loop (wireless local loop, WLL) station, a personal digital assistant (personal digital assistant, PDA) device, a handheld device having a wireless communication function, a computing device or another processing device connected to a wireless modem, a vehicle-mounted device, a wearable device (which may also be referred to as a wearable smart device), a tablet computer or a computer having a wireless transceiver function, a virtual reality (virtual reality, VR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a vehicle having a vehicle-to-vehicle (vehicle-to-vehicle, V2V) communication capability, an intelligent connected vehicle, an uncrewed aerial vehicle having an uncrewed aerial vehicle to uncrewed aerial vehicle (UAV to UAV, U2U) communication capability, or the like. The terminal may be mobile or fixed. This is not specifically limited in this application.

Optionally, the network device is a device for connecting a terminal device to a wireless network, and may be an evolved NodeB (evolved NodeB, eNB or eNodeB) in an LTE or evolved LTE (LTE-Advanced, LTE-A) system, for example, a conventional macro base station eNB and a micro base station eNB in a heterogeneous network scenario; may be a next generation NodeB (next generation NodeB, gNodeB or gNB) in a 5G system; may be a transmission reception point (transmission reception point, TRP); may be a base station in a future evolved public land mobile network (public land mobile network, PLMN); may be a broadband network gateway (broadband network gateway, BNG), an aggregation switch, or a non-3GPP access device; may be a radio controller in a cloud radio access network (cloud radio access network, CRAN); may be an access node (access point, AP) in a Wi-Fi system; may be a radio relay node or a radio backhaul node; or may be a device for implementing a base station function in IoT, a device for implementing a base station function in V2X, a device for implementing a base station function in D2D, or a device for implementing a base station function in M2M. This is not specifically limited in embodiments of this application.

For example, the base station in embodiments of this application may include base stations in various forms, for example, a macro base station, a micro base station (also referred to as a small cell), a relay station, and an access point. This is not specifically limited in embodiments of this application.

Optionally, during specific implementation, the network device may be a central unit (central unit, CU) or a distributed unit (distributed unit, DU), or the network device may include the CU and the DU. The CU and the DU may be obtained through division based on protocol layers of a wireless network. For example, functions of a radio resource control (radio resource control, RRC) protocol layer, a service data adaptation protocol (service data adaptation protocol, SDAP) layer, and a packet data convergence protocol (packet data convergence protocol, PDCP) layer are set in the CU, and functions of a radio link control (radio link control, RLC) layer, a media access control (media access control, MAC) layer, and a physical (physical, PHY) layer are set in the DU.

It may be understood that, division into processing functions of the CU and the DU based on the protocol layers is merely an example, and division may alternatively be performed in another manner. This is not specifically limited in this application.

In some embodiments, the CU may include a CU control plane (CU control plane, CU-CP) and a CU user plane (CU user plane, CU-UP).

Optionally, the core network device is mainly responsible for processing, for example, forwarding and charging a user packet. For example, in a 5G communication system, the core network device may be a user plane function (user plane function, UPF) network element.

The communication system shown in FIG. 2 is merely an example for description. The communication system does not constitute any limitation on the solutions of this application, and a communication system to which the solutions of this application are applicable is not limited thereto.

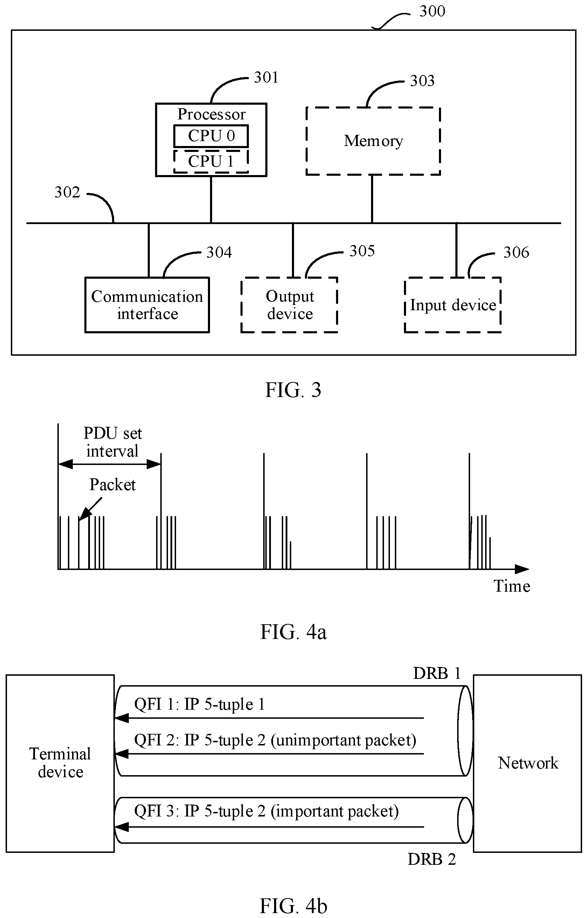

Optionally, during specific implementation, the terminal device, the network device, or the core network device shown in FIG. 2 may use a composition structure shown in FIG. 3, or include components shown in FIG. 3. FIG. 3 is a composition diagram of a communication apparatus 300 according to this application. The communication apparatus 300 may be a terminal device, or a chip or a system on chip in the terminal device; may be a network device, or a module, a chip, or a system on chip in the network device; or may be a core network device, or a module, a chip, or a system on chip in the core network device.

As shown in FIG. 3, the communication apparatus 300 includes at least one processor 301 and at least one communication interface (FIG. 3 is merely an example in which one communication interface 304 and one processor 301 are included for description). Optionally, the communication apparatus 300 may further include a communication bus 302 and a memory 303.

The processor 301 may be a central processing unit (central processing unit, CPU), a general-purpose processor, a network processor (network processor, NP), a digital signal processing (digital signal processing, DSP), a microprocessor, a microcontroller, a programmable logic device (programmable logic device, PLD), or any combination thereof. Alternatively, the processor 301 may be another apparatus having a processing function, for example, a circuit, a component, or a software module. This is not limited.

The communication bus 302 is configured to connect different components in the communication apparatus 300, so that the different components can communicate with each other. The communication bus 302 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is for representing the bus in FIG. 3, but this does not mean that there is only one bus or only one type of bus.

The communication interface 304 is configured to communicate with another device or a communication network. For example, the communication interface 304 may be a module, a circuit, a transceiver, or any apparatus that can implement communication. Optionally, the communication interface 304 may alternatively be an input/output interface located in the processor 301, and is configured to implement signal input and signal output of the processor.

The memory 303 may be an apparatus having a storage function, and is configured to store instructions and/or data, where the instructions may be a computer program.

For example, the memory 303 may be a read-only memory (read-only memory, ROM) or another type of static storage device that can store static information and/or instructions, may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another compact disc storage, optical disc storage (including a compressed optical disc, a laser disc, an optical disc, a digital universal optical disc, a Blu-ray optical disc, and the like), a magnetic disk storage medium or another magnetic storage device, or the like. This is not limited.

It should be noted that the memory 303 may be independent of the processor 301, or may be integrated with the processor 301. The memory 303 may be located inside the communication apparatus 300, or may be located outside the communication apparatus 300. This is not limited. The processor 301 may be configured to execute the instructions stored in the memory 303, to implement a method provided in the following embodiment of this application.

In an optional implementation, the communication apparatus 300 may further include an output device 305 and an input device 306. The output device 305 communicates with the processor 301, and may display information in a plurality of manners. For example, the output device 305 may be a liquid crystal display (liquid crystal display, LCD), a light emitting diode (light emitting diode, LED) display device, a cathode ray tube (cathode ray tube, CRT) display device, or a projector (projector). The input device 306 communicates with the processor 301, and may receive an input of a user in a plurality of manners. For example, the input device 306 may be a mouse, a keyboard, a touchscreen device, or a sensor device.

It should be noted that the structure shown in FIG. 3 does not constitute a specific limitation on the access network device, the core network device, or the terminal device. For example, in some other embodiments of this application, the access network device, the core network device, or the terminal device may include more or fewer components than those shown in the figure, or combine some components, or split some components, or have different component arrangements. The components shown in the figure may be implemented by hardware, software, or a combination of software and hardware.

For ease of understanding the technical solutions in embodiments of this application, a conventional technology of this application is first briefly described as follows.

### 1. Reflective (reflective) quality of service (quality of service, QoS)

For an uplink packet, a terminal device may map the packet to a QoS flow according to a QoS rule, and/or map the QoS flow to a DRB according to a QoS flow to data radio bearer (data radio bearer, DRB) mapping rule.

For example, the QoS rule includes the following parameters: a packet filter set (Packet Filter Set), a QoS flow identifier (QoS flow identifier, QFI), and precedence (precedence). The packet filter set may include several packet filters, and the packet filter set may be classified into an IP packet filter set, an Ethernet packet filter set, and the like.

For example, a packet filter in the IP packet filter set may include at least one of the following parameters:
a source internet protocol (internet protocol, IP) address and a destination IP address;
a source port number and a destination port number;
a protocol number;
a type of service (Type of Service, TOS) or a traffic class (Traffic Class);
a flow label (Flow Label);
a security parameter index (Security parameter index); and
a packet filter direction (Packet Filter direction).

The source IP address, the destination IP address, the source port number, the destination port number, and the protocol number may be collectively referred to as an IP 5-tuple.

It should be noted that types of parameters included in different packet filters in the packet filter set may be different. For example, a packet filter 1 may include the IP 5-tuple, and the packet filter 2 may include the IP 5-tuple, the TOS, and the like. Certainly, types of parameters included in different packet filters may alternatively be the same. This is not specifically limited in this application.

Table 1 shows an example of the QoS rule. It is specified that an uplink packet whose IP 5-tuple is an IP 5-tuple 1 and TOS is a TOS 1 is mapped to a QFI 1, and precedence is 1; an uplink packet whose IP 5-tuple is the IP 5-tuple 1 and TOS is a TOS 2 is mapped to a QFI 2, and precedence is 2; and an uplink packet whose IP 5-tuple is an IP 5-tuple 2 is mapped to a QFI 3, and precedence is 1.

**Table 1**

| Packet filter set | QFI | Precedence |
|---|---|---|
| IP 5-tuple 1, TOS 1 | QFI 1 | 1 |
| IP 5-tuple 1, TOS 2 | QFI 2 | 2 |
| IP 5-tuple 2 | QFI 3 | 1 |

For example, the QoS flow to DRB mapping rule may include parameters such as the QFI and a DRB. Table 2 shows an example of the QoS flow to DRB mapping rule. It is specified that a QoS flow whose QFI is a QFI 1 is mapped to a DRB 1, a QoS flow whose QFI is a QFI 2 is mapped to the DRB 1, and a QoS flow whose QFI is a QFI 3 is mapped to a DRB 2.

**Table 2**

| QFI | DRB |
|---|---|
| QFI 1 | DRB 1 |
| QFI 2 | DRB 1 |
| QFI 3 | DRB 2 |

It should be noted that the foregoing merely describes the QoS rule and the QoS flow to DRB mapping rule by using examples. During actual application, the QoS rule and the QoS flow to DRB mapping rule may include more or fewer parameters than those in the foregoing examples. This is not specifically limited in this application.

It should be noted that the table is merely a representation form of the QoS rule and the QoS flow to DRB mapping rule. Alternatively, the QoS rule and the QoS flow to DRB mapping rule may be represented by using one table, or the QoS rule and the QoS flow to DRB mapping rule may be represented in another manner. Representation forms of the two rules are not specifically limited in this application.

The QoS rule and the QoS flow to DRB mapping rule that are maintained by the terminal device may be configured by a network device by using signaling, or may be obtained by the terminal device through self-learning in a reflective QoS manner.

The reflective QoS manner can reduce complexity of configuring the terminal device by a network, and reduce signaling overheads. Simply speaking, an idea of the reflective QoS is as follows: The terminal device has received a packet from a location. If the terminal device needs to send a packet to the location, the terminal device sends the packet along an original path.

For example, it is assumed that the terminal device receives a downlink packet from the network, where a packet header of the downlink packet carries information such as "source IP address=A, destination IP address=B (an IP address on the terminal device), protocol number=TCP, and QFI=1", and the terminal device learns that the downlink packet is received from the DRB 1. Based on the downlink packet, the terminal device may learn that if the terminal device needs to send a packet to a destination whose IP address is A in the network (for example, a lower protocol layer of the terminal device receives a packet from an application layer, and a destination address of the packet is A), the terminal device may learn that the terminal device needs to map the packet to a QoS flow whose QFI is 1, and needs to map the QFI 1 to the DRB 1. Therefore, the terminal device constructs a QoS rule "IP 5-tuple A→QFI 1" and a QoS flow to DRB mapping rule "QFI 1→DRB 1" through self-learning.

### 2. Layered QoS

Generally, transmission of all packets in a same IP flow (namely, packets that carry same information such as an IP 5-tuple and a TOS) is performed on a same QoS flow and/or DRB. However, with development of an extended reality (extended reality) service, a layered QoS technology is gradually introduced.

It should be noted that, in this application, transmission of a packet on a QoS flow and/or a DRB may alternatively be understood as mapping the packet to the QoS flow and/or the DRB, mapping the packet to the QoS flow and/or the DRB for transmission, or transmission of the packet by using the QoS flow and/or the DRB, and these may be replaced with each other.

The XR service is a general term for services such as augmented reality (augmented reality, AR) and virtual reality (virtual reality, VR). From a perspective of coding, video packets of the XR service may be classified into types such as an I-frame, a P-frame, and a B-frame. Different types of frames may have different importance.

In the XR service, one frame may carry one picture, and a data volume of one picture is large. Therefore, one frame is usually split into dozens to hundreds of packets. For example, as shown in FIG. 4a, each black short vertical strip represents one packet, and one cluster aggregated by several packets is referred to as one frame. The frame of the XR service may be understood as a form of a PDU set (set).

In the layered QoS technology, the packets in the same IP flow may be mapped to different QoS flows and/or DRBs, to implement more refined QoS management and provide different QoS guarantees for the packets in the same IP flow. For example, importance of different packets in an IP flow may be different. For example, importance of an I-frame, a P-frame, and a B-frame may be different. In this case, the layered QoS technology may be used to map an important packet and an unimportant packet to different QoS flows and/or DRBs for transmission.

For example, as shown in FIG. 4b, for picture packets in a same video IP flow (packets carrying an IP 5-tuple 2), a part of the packets may carry person information in a picture, and another part of the packets may carry background information in the picture. In this case, the packet carrying the person information is relatively important, the packet carrying the background information is relatively unimportant. In this case, a network may map the important packet in the video IP flow to a QoS flow 3 and a DRB 2 for transmission, and map the unimportant packet to a QoS flow 2 and a DRB 1 for transmission. In this scenario, the network may allocate more resources to the QoS flow 3 and the DRB 2, to ensure the transmission of the important packet.

In addition, a network device may further map an unimportant packet in another IP flow to the DRB 1 for transmission. For example, as shown in FIG. 4b, the network device may map a packet carrying an IP 5-tuple 1 to a QoS flow 1, and transmit the packet on the DRB 1.

The foregoing reflective QoS manner has been working well. However, with introduction of a layered QoS technology, the conventional reflective QoS manner currently faces some problems.

For example, based on the example shown in FIG. 4b, it is assumed that the terminal device first receives a packet in the QoS flow 2 by using the DRB 1, and generates a QoS rule "IP 5-tuple 2→QFI 2" and a QoS flow to DRB mapping rule "QFI 2→DRB 1" through learning in the conventional reflective QoS manner. In this case, a QoS rule and a QoS flow to DRB mapping rule that are maintained by the terminal device may be respectively shown in Table 3a and Table 3b. The IP 5-tuple 2' is related to the IP 5-tuple 2. For example, a destination IP address in the IP 5-tuple 2' is a source IP address in the IP 5-tuple 2, a destination port is a source port in the IP 5-tuple 2, a source IP address in the IP 5-tuple 2' is a destination IP address in the IP 5-tuple 2, and a source port is a destination port in the IP 5-tuple 2.

**Table 3a**

| Packet filter set | QFI |
|---|---|
| IP 5-tuple 1 | QFI 1 |
| IP 5-tuple 2' | QFI 2 |

**Table 3b**

| QFI | DRB |
|---|---|
| QFI 1 | DRB 1 |
| QFI 2 | DRB 1 |

Then, it is assumed that the terminal device receives a packet in the QoS flow 3 by using the DRB 2, and generates a QoS rule "IP 5-tuple 2'→QFI 3" and a QoS flow to DRB mapping rule "QFI 3→DRB 2" through learning in the conventional reflective QoS manner. In this case, in the current conventional reflective QoS manner, if a QoS rule generated by the terminal device based on a newly arrived packet is inconsistent with a locally stored QoS rule, the locally stored QoS rule is replaced with the newly generated QoS rule. In other words, the QoS rule maintained by the terminal device is updated from Table 3a to Table 4a.

**Table 4a**

| Packet filter set | QFI |
|---|---|
| IP 5-tuple 1 | QFI 1 |
| IP 5-tuple 2' | QFI 3 |

After the QoS rule is updated, there is no QoS rule related to the QFI 2. In other words, when the terminal device sends an uplink packet, the terminal device does not map the uplink packet to the QoS flow 2 for transmission. In this case, the terminal device may consider that a QoS flow to DRB mapping rule related to the QFI 2 is not used subsequently. Therefore, the terminal device may delete the QFI 2 to DRB 1 mapping rule. Certainly, the terminal device may alternatively retain the QFI 2 to DRB 1 mapping rule. In other words, the QoS flow to DRB mapping rule maintained by the terminal device may be updated from Table 3b to Table 4b or Table 4c.

**Table 4b**

| QFI | DRB |
|---|---|
| QFI 1 | DRB 1 |
| QFI 3 | DRB 2 |

**Table 4c**

| QFI | DRB |
|---|---|
| QFI 1 | DRB 1 |
| QFI 2 | DRB 1 |
| QFI 3 | DRB 2 |

Based on the foregoing examples, the QoS rule maintained by the terminal device is frequently replaced. For example, after the packet in the QoS flow 3 is received by using the DRB 2, it is assumed that the terminal device receives a packet in the QoS flow 2 by using the DRB 1, and the QoS rule is updated from Table 4a to Table 3a.

In addition, for the XR service, it is expected that layered QoS can be implemented in both an uplink and a downlink. In other words, in uplink transmission, layered QoS corresponding to the downlink is used for transmission. For example, based on the example shown in FIG. 4b, in the uplink transmission, it is expected that an important packet may be transmitted by using the DRB 2 and the QoS flow 3, and an unimportant packet may be transmitted by using the DRB 1 and the QoS flow 2. However, uplink layered QoS cannot be implemented according to the QoS rule generated in the current conventional reflective QoS manner. In other words, uplink packets in a same IP flow are still mapped to same QoS flow and/or a same DRB for transmission.

In view of this, this application provides a new reflective QoS manner, which is referred to as a first reflective QoS manner below. Certainly, the first reflective QoS manner may alternatively have another name. This is not specifically limited in this application.

The terminal device may identify classification information of a packet in the first reflective QoS manner, where the classification information is for distinguishing between packets in a same IP flow. For example, the classification information may be for distinguishing whether the packet is a key packet or a background packet, may be for distinguishing whether the packet is important, may be for distinguishing between importance levels of the packets, may be for distinguishing whether to allow loss (or discarding) of the packet, or may be for distinguishing between levels of packet loss (or discarding) allowed. Alternatively, packets in a same IP flow may be distinguished between in another possible classification manner. In other words, in addition to parameters such as an IP 5-tuple and a TOS, the terminal device may further identify the classification information of the packet, and distinguish between the packets in the same IP flow at a finer granularity by using the classification information, to generate a QoS rule and/or a QoS flow to DRB mapping rule that can implement the uplink layered QoS.

In addition, during actual application, a common service and a service that needs layered QoS may coexist. For this scenario, this application further provides a solution, so that the terminal device learns whether the conventional reflective QoS manner or the first reflective QoS manner provided in this application should be used for a received downlink packet.

With reference to the accompanying drawings, the following describes in detail a method provided in embodiments of this application by using interaction between a terminal device and a network device as an example.

It may be understood that, in embodiments of this application, an execution body may perform a part or all of steps in embodiments of this application. These steps or operations are merely examples. In embodiments of this application, other operations or variations of various operations may be further performed. In addition, the steps may be performed in a sequence different from a sequence presented in embodiments of this application, and it is possible that not all operations in embodiments of this application need to be performed.

It should be noted that, in the following embodiments of this application, a name of a message between devices or a name or the like of each parameter in the message is merely an example, and may alternatively be another name in a specific implementation. This is not specifically limited in embodiments of this application.

For example, the method provided in the following embodiments of this application may be applied to a scenario related to an XR service. Certainly, an application scenario of this application is merely described herein by using an example. The application scenario does not constitute any limitation on this application. An application scenario of the method provided below is not specifically limited in this application either. For example, the method may be further applied to another scenario related to a layered QoS technology.

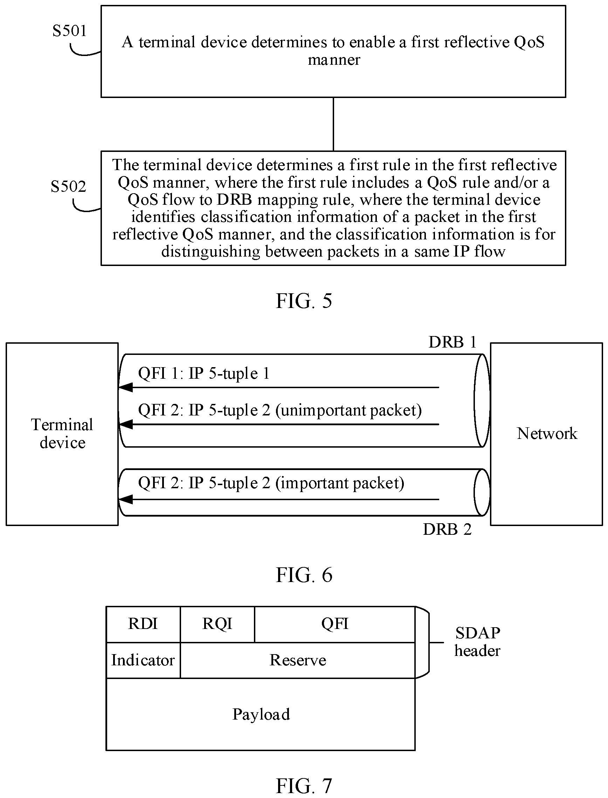

FIG. 5 shows a reflective QoS method according to an embodiment of this application. The reflective QoS method includes the following steps.

S501: A terminal device determines to enable a first reflective QoS manner.

Optionally, that a terminal device determines to enable a first reflective QoS manner may alternatively be understood as that the terminal device determines to use the first reflective QoS manner, the terminal device selects the first reflective QoS manner, or the terminal device enables a function of the first reflective QoS manner.

Optionally, the terminal device may support the first reflective QoS manner and a conventional reflective QoS manner. When reflective QoS needs to be performed, the terminal device may determine whether to enable the first reflective QoS manner or the conventional reflective QoS manner.

Optionally, whether the terminal device needs to perform reflective QoS may be indicated by a network device. For example, the network device may send first indication information and/or second indication information to the terminal device. When receiving the first indication information and/or the second indication information, the terminal device may determine that the reflective QoS needs to be performed.

Optionally, the first indication information indicates to notify a non-access stratum (non-access stratum, NAS) of an update of a service data flow (service data flow, SDF) to QoS flow mapping rule. Implicitly, the first indication information indicates to update the SDF to QoS flow mapping rule, and notifies the NAS of the update.

Optionally, the first indication information may be carried in a reflective QoS indication (reflective QoS indication, RQI) field of an SDAP header (header). When a value of the RQI field is 1, it indicates the first indication information. In this case, the first indication information may indicate an SDAP layer to update the SDF to QoS flow mapping rule, and notify the NAS of the update.

Optionally, the second indication information indicates to update a QoS flow to DRB mapping rule. Alternatively, the second indication information indicates to store a QoS flow to DRB mapping rule. Implicitly, the second indication information indicates to update and store the QoS flow to DRB mapping rule.

Optionally, the second indication information may be carried in a reflective QoS flow to DRB mapping indication (reflective QoS flow to DRB mapping indication, RDI) field of the SDAP header. The RDI field indicates whether to update the QoS flow to DRB mapping rule. When a value of the RDI field is 1, it indicates the second indication information. In this case, the second indication information may indicate the SDAP layer to update the QoS flow to DRB mapping rule.

S502: The terminal device determines a first rule in the first reflective QoS manner.

The first rule determined by the terminal device may be for uplink transmission. For example, the first rule may include a QoS rule and/or the QoS flow to DRB mapping rule. The QoS rule may indicate the SDF to QoS flow mapping rule. In other words, the QoS rule is for mapping an SDF to a QoS flow. Certainly, the first rule may further include another rule related to QoS. This is not specifically limited in this application.

Optionally, when the terminal device receives the first indication information, the first rule may include the QoS rule. When the terminal device receives the second indication information, the first rule may include the QoS flow to DRB mapping rule.

The terminal device identifies classification information of a packet in the first reflective QoS manner. In other words, the first reflective QoS manner indicates (or specifies) the terminal device to identify the classification information of the packet. The classification information is for distinguishing between packets in a same IP flow.

Optionally, the classification information may be for distinguishing between packets of different frame types in the same IP flow, in other words, the packets in the same IP flow may be distinguished between based on the classification information at a granularity of frame types. Alternatively, the classification information may be for distinguishing between different packets of a same frame type in the same IP flow, in other words, the packets in the same IP flow may be distinguished between based on the classification information at a granularity of frame types; and the different packets of the same frame type may be further distinguished between, in other words, different packets in a same frame may be carried by using different QoS flows or DRBs.

Optionally, the classification information may include at least one of the following: a type of the packet, an importance level of the packet, a flag bit indicating whether to allow discarding of the packet, a type of a PDU set (set) to which the packet belongs, an importance level of the PDU set to which the packet belongs, a flag bit indicating whether to allow discarding of the PDU set to which the packet belongs, a level of packet loss (or discarding) allowed, or a level of PDU set loss (or discarding) allowed. The PDU set may include one or more packets, or may include one or more PDUs. For example, the PDU set may also be referred to as a frame. Two descriptions of "a packet of a PDU set" and "a PDU of a PDU set" may be replaced with each other.

For example, the type of the packet may be classified into a key packet or a background packet, or may be classified into a packet carrying person information or a packet carrying background information. From a perspective of coding, a type of a PDU set to which a video packet belongs may be classified into an I-frame, a P-frame, a B-frame, or the like.

For example, the importance level of the packet may be classified into an important level or an unimportant level, may be classified into two levels: high and low, may be classified into three levels: high, medium, and low, or may be classified into a level 1, a level 2, a level 3, and the like. A smaller level value indicates a higher importance level, or a smaller level value indicates a higher importance level. This is not limited. For example, an importance level of the key packet may be an important level, and an importance level of the background packet may be an unimportant level. Alternatively, an importance level of the packet carrying the person information may be high, and an importance level of the packet carrying the background information may be low.

For an implementation of the importance level of the PDU set to which the packet belongs, refer to related descriptions of the importance level of the packet. Details are not described herein again.

For example, the flag bit indicating whether to allow discarding of the packet may indicate whether the terminal device is allowed to discard the packet. The flag bit indicating whether to allow discarding of the PDU set to which the packet belongs may indicate whether the terminal device is allowed to discard the packet of the PDU set.

Optionally, a parameter in the first rule may include the classification information. When the first rule includes the QoS rule, the classification information may be a parameter in a packet filter, or may be a parameter parallel to the packet filter. Because the packets in the same IP flow may be classified based on the classification information, that the parameter in the first rule includes the classification information may alternatively be understood as that the first rule corresponds to one or more types of packets in the same IP flow.

Optionally, that the terminal device determines a first rule in the first reflective QoS manner may include: The terminal device identifies the classification information of the packet, and uses the classification information as the parameter in the first rule. In addition, the terminal device may further identify parameters specified in an existing packet filter, such as an IP 5-tuple and a TOS of the packet. The packet may be a downlink packet.

Optionally, after determining a QoS rule in the first reflective QoS manner, the terminal device may check whether a QoS rule "existing packet filter+classification information" exists in a QoS rule table maintained by the terminal device. If the QoS rule exists, the existing QoS rule is replaced with the currently newly determined QoS rule. If the QoS rule does not exist, the currently newly determined QoS rule is added to the QoS rule table. After determining a QoS flow to DRB mapping rule in the first reflective QoS manner, the terminal device may choose, in a similar manner, to update an existing rule or add the currently newly determined rule. Details are not described herein again.

In a possible implementation, the classification information of the packet may be carried in the packet. In this case, that the terminal device identifies the classification information of the packet may include: The terminal device extracts the classification information from the packet. For example, a packet classification field may be set in the packet, and the packet classification field carries the classification information of the packet. For example, when the classification information is the type of the packet, the packet classification field may be specifically a packet type field. When the classification information is the type of the PDU set to which the packet belongs, the packet classification field may be specifically a PDU set type field.

In another possible implementation, that the terminal device identifies the classification information of the packet may include: The terminal device identifies the classification information of the packet based on an arrival characteristic of the packet.

For example, the network device and the terminal device may pre-agree on a packet sending mode, and the packet sending mode indicates a sending rule of a plurality of types of packets in a same IP flow. The terminal device may identify the classification information of the packet according to the packet sending mode. For example, the classification information is the importance level of the packet. It is assumed that the packet sending mode indicates that packets in the IP flow are sent according to a rule of one important packet and three unimportant packets. Classification information of a 1^{st} packet in the IP flow received by the terminal device may be "important", classification information of a 2^{nd} to a 4^{th} packets may be "unimportant", classification information of a 5^{th} packet may be "important", classification information of a 6^{th} to an 8^{th} packets may be "unimportant", and so on.

Alternatively, for example, the terminal device may identify the classification information of the packet based on a quantity of packets in an IP flow that are received in a time period. For example, in a time period T, if the quantity of packets in the IP flow that are received by the terminal device is greater than a threshold, classification information of the packets in the IP flow that are received in the time period is "important". If the quantity of packets in the IP flow that are received by the terminal device in the time period T is less than or equal to a threshold, classification information of the packets in the IP flow that are received in the time period is "unimportant".

For example, the following uses the scenario shown in FIG. 4b as an example to describe application of the method provided in this application in the scenario.

After receiving a packet (denoted as a packet 1) carrying the IP 5-tuple 1, a terminal device may determine to enable a conventional reflective QoS manner, and determine a first rule based on the packet 1 in the conventional reflective QoS manner. For example, the first rule includes a QoS rule and/or a QoS flow to DRB mapping rule. After the step is completed, a QoS rule and a QoS flow to DRB mapping rule that are maintained by the terminal device may be respectively shown in Table 5a and Table 5b.

**Table 5a**

| Packet filter set | QFI |
|---|---|
| IP 5-tuple 1' | QFI 1 |

**Table 5b**

| QFI | DRB |
|---|---|
| QFI 1 | DRB 1 |

After receiving, by using the DRB 1, a packet (denoted as a packet 2) that is in the QoS flow 2 and that carries the IP 5-tuple 2, the terminal device may determine to enable a first reflective QoS manner, and determine the first rule based on the packet 2 in the first reflective QoS manner. It is assumed that classification information is an importance level of a packet, and classification information of the packet 2 is "unimportant". After the step is completed, the QoS rule and the QoS flow to DRB mapping rule that are maintained by the terminal device may be respectively shown in Table 6a and Table 6b.

**Table 6a**

| Packet filter set | QFI |
|---|---|
| IP 5-tuple 1' | QFI 1 |
| IP 5-tuple 2', unimportant | QFI 2 |

**Table 6b**

| QFI | DRB |
|---|---|
| QFI 1 | DRB 1 |
| QFI 2 | DRB 1 |

Then, after receiving, by using the DRB 2, a packet (denoted as a packet 3) that is in the QoS flow 3 and that carries the IP 5-tuple 2, the terminal device may determine to enable the first reflective QoS manner, and determine the first rule based on the packet 3 in the first reflective QoS manner. It is assumed that the classification information is the importance level of the packet, and classification information of the packet 3 is "important". After the step is completed, the terminal device may determine a QoS rule "IP 5-tuple 2', important→QFI 3" and a QoS flow to DRB mapping rule "QFI 3→DRB 2".

In this case, because the QoS rule maintained by the terminal device does not include the rule "IP 5-tuple 2', important→QFI 3", the terminal device may add, to a QoS rule table, the rule determined based on the packet 3. In other words, after the step is completed, the QoS rule and the QoS flow to DRB mapping rule that are maintained by the terminal device may be respectively shown in Table 7a and Table 7b.

**Table 7a**

| Packet filter set | QFI |
|---|---|
| IP 5-tuple 1' | QFI 1 |
| IP 5-tuple 2', unimportant | QFI 2 |
| IP 5-tuple 2', important | QFI 3 |

**Table 7b**

| QFI | DRB |
|---|---|
| QFI 1 | DRB 1 |
| QFI 2 | DRB 1 |
| QFI 3 | DRB 2 |

Optionally, as shown in Table 7a, if the first rule includes a 2^{nd} QoS rule or a 3^{rd} QoS rule in Table 7a, the first rule corresponds to a type of packet (namely, an unimportant packet or an important packet) in an IP flow 2 (an IP 5-tuple of the IP flow 2 is the IP 5-tuple 2'). If the first rule includes a 2^{nd} QoS rule and a 3^{rd} QoS rule in Table 7a, the first rule corresponds to a plurality of types of packets in an IP flow 2.

The foregoing uses an example in which the QoS rule includes the classification information for description. In addition, the QoS flow to DRB mapping rule may also include the classification information. For example, in a downlink direction, when a network side transmits packets in a same IP flow by using a same QoS flow and different DRBs, a QoS flow to DRB mapping rule determined by the terminal device by using reflective QoS may include the classification information.

For example, as shown in FIG. 6, it is assumed that the network side transmits, by using a QoS flow 1 and a DRB 1, a packet (denoted as a packet 4) carrying an IP 5-tuple 1, transmits, by using a QoS flow 2 and the DRB 1, an unimportant packet (denoted as a packet 5) carrying an IP 5-tuple 2, and transmits, by using the QoS flow 2 and a DRB 2, an important packet (denoted as a packet 6) carrying the IP 5-tuple 2. In this case, QoS rules determined by the terminal device based on the received three packets may be shown in Table 8a.

**Table 8a**

| Packet filter set | QFI |
|---|---|
| IP 5-tuple 1' | QFI 1 |
| IP 5-tuple 2' | QFI 2 |

For the QoS flow to DRB mapping rule, after receiving the packet 4, the terminal device may determine to enable the conventional reflective QoS manner, and determine the QoS flow to DRB mapping rule based on the packet 4 in the conventional reflective QoS manner.

After receiving the packet 5, the terminal device may determine to enable the first reflective QoS manner, and determine the QoS flow to DRB mapping rule based on the packet 5 in the first reflective QoS manner. It is assumed that the classification information is the importance level of the packet, and classification information of the packet 5 is "unimportant". After the step is completed, the terminal device may determine a QoS flow to DRB mapping rule "QFI 2, unimportant→DRB 1". In this case, the QoS flow to DRB mapping rule maintained by the terminal device may be shown in Table 8b.

**Table 8b**

| QFI | DRB | Classification information |
|---|---|---|
| QFI 1 | DRB 1 | / |
| QFI 2 | DRB 1 | Unimportant |

That the classification information is "/" indicates that a parameter in a first rule (for example, the QoS flow to DRB mapping rule shown in Table 8b) does not include the classification information, or indicates that the classification information is empty. In this case, when data is sent (for example, a QoS flow is mapped to a DRB) according to the first rule, the classification information does not need to be considered.

Then, after receiving the packet 6, the terminal device may determine to enable the first reflective QoS manner, and determine the first rule based on the packet 6 in the first reflective QoS manner. It is assumed that the classification information is the importance level of the packet, and classification information of the packet 6 is "important". After the step is completed, the terminal device may determine a QoS flow to DRB mapping rule "QFI 2, important→DRB 2".

In this case, because the QoS flow to DRB mapping rule maintained by the terminal device does not include the rule "QFI 2, important→DRB 2", the terminal device may add, to a QoS flow to DRB mapping rule table, the rule determined based on the packet 6. In other words, after the step is completed, the QoS flow to DRB mapping rule maintained by the terminal device may be shown in Table 8c.

**Table 8c**

| QFI | DRB | Classification information |
|---|---|---|
| QFI 1 | DRB 1 | / |
| QFI 2 | DRB 1 | Unimportant |
| QFI 2 | DRB 2 | Important |

It may be understood that, after receiving the packet 6, if the terminal device determines the QoS flow to DRB mapping rule in the conventional reflective QoS manner, the QoS flow to DRB mapping rule maintained by the terminal device after the step is shown in Table 8d.

**Table 8d**

| QFI | DRB |
|---|---|
| QFI 1 | DRB 1 |
| QFI 2 | DRB 2 |

It can be learned from Table 8d that, during uplink transmission, the terminal device cannot map a QoS flow to two DRBs, and therefore cannot complete uplink layered QoS. According to the solution of this application, the terminal device may map the QoS flow 2 to different DRBs based on Table 8c and depending on whether the packet is important, to implement uplink layered QoS.

According to the solution, the terminal device may enable the first reflective QoS manner, and determine the first rule, for example, the QoS rule and/or the QoS flow to DRB mapping rule, in the first reflective QoS manner. The terminal device may identify the classification information of the packet in the first reflective QoS manner. The classification information may be for distinguishing between the packets in the same IP flow. Therefore, when performing reflective QoS in the first reflective QoS manner, the terminal device can distinguish between the packets in the same IP flow. In this way, downlink layered QoS is identified, and a corresponding uplink layered QoS rule is determined according to a downlink layered QoS rule, to implement uplink layered QoS, implement more refined uplink QoS management, and improve transmission flexibility.

The foregoing describes an overall procedure of the solution of this application. The following provides related descriptions of an implementation in which the terminal device determines to enable the first reflective QoS manner in step S501. For example, the terminal device may use the following two manners.

Manner 1: The terminal device determines, based on a first packet from the network device, to enable the first reflective QoS manner.

Optionally, the network device may generate the first packet, and send the first packet to the terminal device. Correspondingly, the terminal device receives the first packet from the network device, and determines, based on the first packet, to enable the first reflective QoS manner.

In a possible implementation, the first packet includes third indication information. The third indication information indicates the terminal device to determine the first rule in the first reflective QoS manner, and/or the third indication information indicates that the first packet is a packet of a first QoS type. The first packet may be a data packet.

For example, that the terminal device determines, based on a first packet from the network device, to enable the first reflective QoS manner may be understood as that when the first packet from the network device includes the third indication information, the terminal device determines to enable the first reflective QoS manner. In addition, in step S502, the terminal device may determine the first rule based on the first packet in the first reflective QoS manner.

Optionally, that the first packet is a packet of a first QoS type may alternatively be understood as that a QoS type of the first packet is the first QoS type, or the first packet is a packet of a first service, and a QoS type of the first service is the first QoS type. For example, the first QoS type may be layered QoS, and the first service may be a service that uses the layered QoS, for example, an XR service.

Optionally, the third indication information may be implemented by using an indicator (indicator). When a value of the indicator is a first value, it may indicate that the third indication information indicates the terminal device to determine the first rule in the first reflective QoS manner, and/or indicates that the first packet is the packet of the first QoS type. Further, when the value of the indicator is a second value, the third indication information may indicate the terminal device to determine the first rule in the conventional reflective QoS manner, and/or indicate that the first packet is a packet of a second QoS type. For example, the second QoS type may be conventional non-layered QoS.

For example, the first value may be 1, and correspondingly, the second value is 0. Alternatively, the first value may be 0, and correspondingly, the second value is 1.

Optionally, the third indication information may be carried in a packet header of the first packet. For example, the third indication information may be carried in a packet header at the SDAP layer (namely, an SDAP header).

For example, the third indication information is implemented by using the indicator, and is carried in the packet header at the SDAP layer. In this case, the packet header at the SDAP layer may be shown in FIG. 7. For an RDI field and an RQI field, refer to the foregoing related descriptions. A QFI field is for carrying a QFI of a packet. The indicator is for carrying the third indication information.

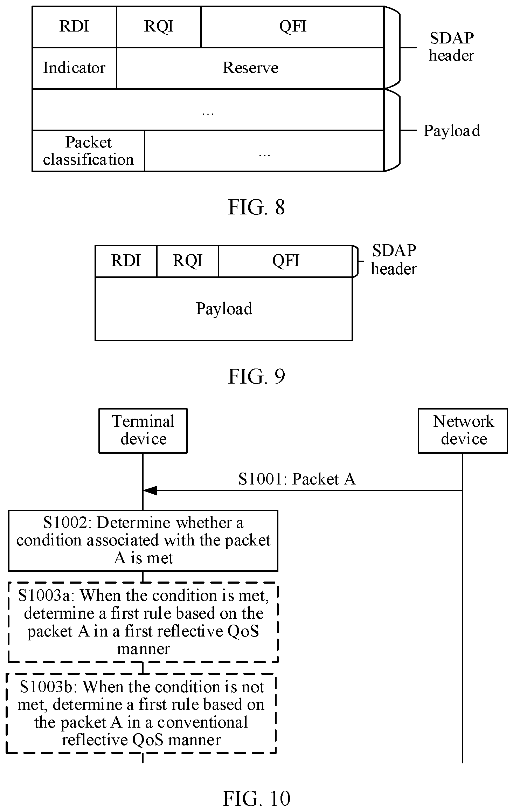

Further, when the packet carries the classification information, as shown in FIG. 8, the first packet may further include a packet classification field, and the classification information is carried in the packet classification field. It should be noted that an example in which the classification field is located in a payload (payload) part of a packet at the SDAP layer is used for description in FIG. 8. Certainly, the classification field may alternatively be carried in the packet header at the SDAP layer or a packet header or a payload part at another protocol layer. This is not specifically limited in this application.

Optionally, when the third indication information is carried in the packet header at the SDAP layer, there may be two types of packet headers at the SDAP layer in a system. For example, for a first type, as shown in FIG. 7, the indicator is carried to carry the third indication information; and for a second type, as shown in FIG. 9, no indicator is carried. In this scenario, if the terminal device supports layered QoS, the terminal device supports an XR service, or the terminal device supports a standard of 3GPP R18 or a subsequent version, the terminal device may parse a packet at the SDAP layer based on a first format. If the terminal device does not support layered QoS, does not support an XR service, or does not support a standard of 3GPP R18 or a subsequent version, the terminal device may parse a packet at the SDAP layer based on a second format.

In another possible implementation, a value of an information element associated with the first packet is a specific value. For example, that the terminal device determines, based on a first packet from the network device, to enable the first reflective QoS manner may be understood as that when the value of the information element associated with the first packet from the network device is the specific value, the terminal device determines to enable the first reflective QoS manner.

Optionally, the information element may include at least one of the following: a QFI, a DRB identifier (identifier, ID), a network slice identifier (for example, single network slice selection assistance information (single network slice selection assistance information, S-NSSAI)), a data network name (data network name, DNN), and a logical channel identifier (logical channel identifier, LCID), a logical channel group (logical channel group, LCG) identifier, or an IP flow identifier.

Optionally, the specific value may be a value defined in a protocol. For example, some specific information elements may be defined in the protocol. When a network performs downlink transmission subsequently, if some services need processing such as layered QoS, the network may transmit the services by using the specific information elements defined in the protocol. When receiving a service packet by using the specific information element, the terminal device may enable the first reflective QoS manner.

For example, the information element is a QFI, the specific value is 2, and a specific QFI is a QFI 2. After the terminal device receives a downlink packet, if a QFI associated with the downlink packet is the QFI 2, the terminal device determines to enable the first reflective QoS manner. If the QFI associated with the downlink packet is not the QFI 2, the terminal device may enable the conventional reflective QoS manner, and does not enable the first reflective QoS manner.

Manner 2: The terminal device determines, based on fourth indication information from the network device, to enable the first reflective QoS manner.

Optionally, the network device may generate the fourth indication information, and send the fourth indication information to the terminal device. Correspondingly, the terminal device receives the fourth indication information from the network device, and determines, based on the fourth indication information, to enable the first reflective QoS manner.

Optionally, the fourth indication information indicates the terminal device to determine the first rule for a first information element in the first reflective QoS manner. For the information element, refer to related descriptions in Manner 1. Details are not described herein again. The first information element may be understood as an information element specified by a network.

For example, that the terminal device determines, based on the fourth indication information from the network device, to enable the first reflective QoS manner may be understood as that when an information element associated with a packet from the network device is the first information element, the terminal device determines to enable the first reflective QoS manner.

Optionally, the fourth indication information may be control plane information. For example, the fourth indication information may be carried in at least one of the following: an SDAP control PDU (SDAP control PDU), a MAC control element (MAC control element, MAC CE), downlink control information (downlink control information, DCI), a NAS message, an RRC message, a PDCP control PDU (PDCP control PDU), or other signaling or another control element.

In a possible implementation, the fourth indication information may include a first field and a second field. The first field is for carrying the first information element, and the second field indicates the terminal device to determine the first rule in the first reflective QoS manner.

For example, an information element is a QFI, and the first information element is a QFI 2. The first field may be a QFI field, and a value of the first field may be a value of the first information element, that is, the value is 2. The second field may be a 1-bit indicator. When a value of the indicator is 1 (or 0), the terminal device may be indicated to determine the first rule in the first reflective QoS manner.

In another possible implementation, the fourth indication information may include a third field, the third field is for carrying the first information element, and the third field further indicates the terminal device to determine the first rule in the first reflective QoS manner. In other words, for the first information element carried in the third field, the terminal device determines the first rule in the first reflective QoS manner.

In still another possible implementation, the fourth indication information may include a fourth field, and the fourth field indicates the terminal device to determine the first rule in the first reflective QoS manner. For an implementation of the fourth field, refer to related descriptions of the second field. Details are not described herein again.

Optionally, when the fourth indication information includes the fourth field, the fourth indication information may be carried in signaling dedicated to the first information element, so that an indication of determining the first rule for the first information element in the first reflective QoS manner is implemented. For example, the signaling carrying the fourth indication information may further carry the first information element, to indicate that the signaling is signaling dedicated to the first information element.

According to the solution, the terminal device may determine, based on the third indication information carried in the packet or the information element associated with the packet, whether to enable the first reflective QoS manner. When enabling the first reflective QoS manner, the terminal device may identify the classification information of the downlink packet. The classification information may be for distinguishing between the packets in the same IP flow. Therefore, when performing reflective QoS in the first reflective QoS manner, the terminal device can distinguish between the packets in the same IP flow. In this way, downlink layered QoS is identified, and a corresponding uplink layered QoS rule is determined according to a downlink layered QoS rule, to implement uplink layered QoS, implement more refined uplink QoS management, and improve transmission flexibility.

The foregoing describes the reflective QoS method provided in this application. The following provides an application procedure of the reflective QoS method. It should be noted that the procedure is merely an example for description, and does not constitute any limitation on the reflective QoS method in this application.

Refer to FIG. 10. The application procedure of the reflective QoS method may include the following steps.

S1001: A network device sends a packet A to a terminal device. Correspondingly, the terminal device receives the packet A from the network device.

S1002: The terminal device determines whether a condition associated with the packet A is met.

A target condition may include at least one of the following: The packet A includes third indication information, a value of an information element associated with the packet A is a specific value, and the information element associated with the packet A is a first information element. For the third indication information, the information element, the specific value, and the first information element, refer to the foregoing related descriptions. Details are not described herein again.

When the condition associated with the packet A is met, the following step S1003a may be performed. When the condition associated with the packet A is not met, the following step S 1003b may be performed.

S1003a: The terminal device determines a first rule based on the packet A in a first reflective QoS manner. The first rule includes a QoS rule and/or a QoS flow to DRB mapping rule.

Optionally, the terminal device may identify classification information of the packet A. In addition, the terminal device may further identify parameters in an existing packet filter, such as an IP 5-tuple and a TOS of the packet A, to determine the first rule based on the identified information.

S1003b: The terminal device determines a first rule based on the packet A in a conventional reflective QoS manner.

Optionally, in step S1003b, the terminal device may not identify the classification information of the packet A. For details, refer to a related implementation of the conventional reflective QoS manner. Details are not described herein again.

In the solution, different QoS guarantees are provided for different packets in a same IP flow based on a layered QoS idea. In addition, this application further provides a second rule, and a packet sending mode is limited according to the second rule, to improve transmission reliability.

Optionally, the second rule includes at least one of the following: An important packet is repeatedly sent for a plurality of times, important information is carried in first N packets or last M packets of a PDU set, or an important packet includes fifth indication information. The fifth indication information indicates a receive end to reply whether the important packet is correctly received. N and M are positive integers.

Optionally, the important packet includes at least one of the following: a 1^{st} packet of a PDU set, a last packet of the PDU set, a packet carrying a PDU set boundary indication, a packet carrying a total size of the PDU set, a packet of an I-frame, a packet that is not allowed to be discarded, or a packet carrying important information.

Optionally, the important information includes at least one of the following.
(1) Information indicating the total size of the PDU set. The total size of the PDU set may be a quantity of packets or PDUs of the PDU set, or may be a total quantity of bytes or a total quantity of bits of the PDU set.
(2) Number information of the PDU set. The number information of the PDU set may be a number or a frame number of the PDU set.
(3) Type identifier of the PDU set. The type identifier of the PDU set indicates a type of the PDU set. The type of the PDU set may be, for example, an I-frame (or an I-slice), a P-frame (or a P-slice), or a B-frame (or a B-slice).
(4) Information indicating a PDU set boundary. The PDU set boundary may be a start packet and/or an end packet of the PDU set, or indicate a start PDU and/or an end PDU of the PDU set. The PDU set boundary indication (or information indicating the PDU set boundary) may include a start identifier and/or an end identifier of the PDU set.
(5) Information indicating an association relationship between a plurality of PDU sets. There may be a dependency relationship or an association relationship between some PDU sets. The information indicating the association relationship between the plurality of PDU sets may be, for example, number information of the PDU sets, a bitmap indicating the number information of the PDU sets, or an identifier indicating the association relationship between the PDU sets. For example, a packet of a PDU set may carry a number of another PDU set associated with the PDU set; a packet of a PDU set may carry a bitmap (bitmap), and each bit (bit) in the bitmap corresponds to one PDU set, when a bit in the bitmap is set to 1, it indicates that a PDU set corresponding to the bit has an association relationship with the current PDU set; or a series of association relationships between PDU sets may be preconfigured, and an identifier of an association relationship in the series of relationships is carried in a packet of a PDU set, to indicate the currently valid association relationship.

Optionally, when the first N packets or the last M packets of the PDU set carry the important information, information carried in the first N packets or the last M packets may be the same or may be different.

For example, the important information is the total size of the PDU set. The first N packets of the PDU set each may carry the following information: The total size of the PDU set is 100 packets. Alternatively, a 1 ^{st} packet of the PDU set may carry 100, to indicate that the total size of the PDU set starting from the current packet is 100 packets; a 2^{nd} packet may carry 99, to indicate that the total size of the PDU set starting from the current packet is 99 packets; and a 3^{rd} packet may carry 98, to indicate that the total size of the PDU set starting from the current packet is 98 packets.

For example, the important information is the end identifier of the PDU set. The end identifier may be carried in the last packet of the PDU set, and the last packet is repeatedly sent for a plurality of times. Alternatively, information indicating an end boundary of the PDU set may be carried in the last M packets of the PDU set. For example, M is equal to 10. The last but nine packet of the PDU set may carry 10, to indicate that there are 10 packets (including the current last but nine packet) before the PDU set ends; the last but eight packet of the PDU set may carry 9, to indicate that there are nine packets (including the current last but eight packet) before the PDU set ends; and by analogy, the last packet of the PDU set may carry 1, to indicate that there is one packet (including the current last packet) before the PDU set ends.

Optionally, both a terminal device and a network device may send a packet according to the second rule. In addition, the second rule may be used independently, or may be used with reference to the method shown in FIG. 5 or FIG. 10. This is not specifically limited in this application.

When the second rule is used with reference to the method shown in FIG. 5 or FIG. 10, the method shown in FIG. 5 or FIG. 10 may further include: The terminal device sends a second packet to the network device according to the second rule.

For example, if the second packet is an important packet, the terminal device may repeatedly send the second packet for a plurality of times. Alternatively, if the second packet is the first N packets or the last M packets of the PDU set, the second packet may carry the important information.

Alternatively, if the second packet is an important packet, the terminal device may include the fifth indication information in the second packet, to indicate the network device to reply whether the second packet is correctly received.

Optionally, if the network device correctly receives the second packet, the network device may send sixth indication information to the terminal device, where the sixth indication information indicates that the second packet is correctly received. If the network device does not correctly receive the second packet, the network device may send seventh indication information to the terminal device, where the seventh indication information indicates that the second packet is not correctly received.

Optionally, after receiving the sixth indication information, the terminal device may continue to send a packet following the second packet. After receiving the seventh indication information, the terminal device may retransmit the second packet.

According to the solution, a transmit end may repeatedly send the important packet for a plurality of times according to the second rule. Compared with sending the important packet once, this can improve transmission reliability of the important packet. Alternatively, a transmit end may include the important information in the first N packets or the last M packets of the PDU set according to the second rule, to improve transmission reliability of the important information. Alternatively, a transmit end may include the fifth indication information in the important packet according to the second rule, to indicate a receive end to feed back whether the important packet is correctly received. When the receive end feeds back that the important packet is not correctly received, the important packet may be retransmitted in time, to improve transmission reliability of the important packet.

It may be understood that, in the foregoing embodiments, the methods and/or the steps implemented by the network device may alternatively be implemented by a component (for example, a processor, a chip, a chip system, a circuit, a logical module, or software such as a chip or a circuit) that can be used in the network device; and the methods and/or the steps implemented by the terminal device may alternatively be implemented by a component (for example, a processor, a chip, a chip system, a circuit, a logical module, or software such as a chip or a circuit) that can be used in the terminal device.

The foregoing mainly describes the solution provided in this application. Correspondingly, this application further provides a communication apparatus. The communication apparatus is configured to implement the foregoing methods. The communication apparatus may be the network device in the foregoing method embodiment, an apparatus including the network device, or a component that can be used in the network device, for example, a chip or a chip system. Alternatively, the communication apparatus may be the terminal device in the foregoing method embodiments, an apparatus including the foregoing terminal device, or a component that can be used in the terminal device, for example, a chip or a chip system.

It may be understood that, to implement the foregoing functions, the communication apparatus includes a corresponding hardware structure and/or software module for performing the function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on a particular application and a design constraint of the technical solutions. A person skilled in the art may use different methods to implement the described functions for each specific application. However, it should not be considered that this implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example, and is only logical function division. During actual implementation, another division manner may be used.

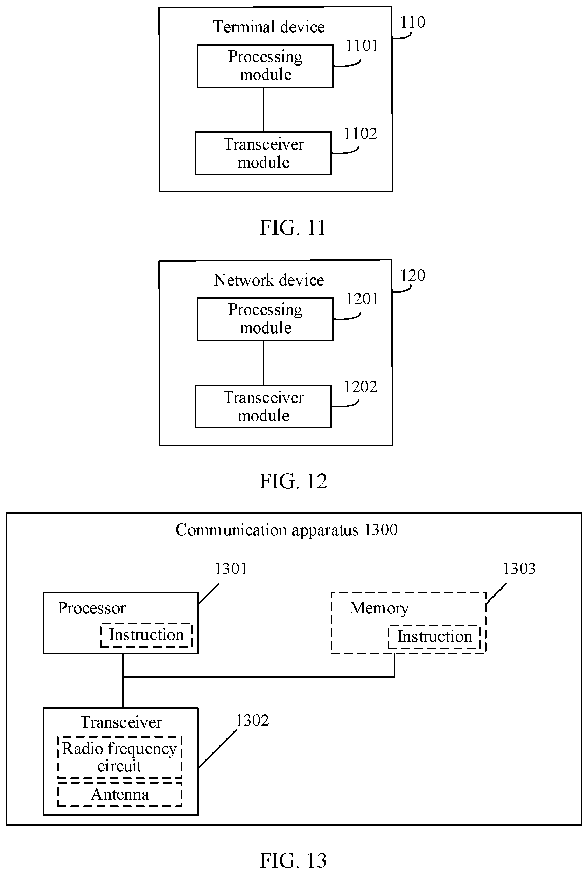

Optionally, an example in which the communication apparatus is the terminal device in the foregoing method embodiment is used. FIG. 11 is a diagram of a structure of a terminal device 110. The terminal device 110 includes a processing module 1101 and a transceiver module 1102.

In some embodiments, the terminal device 110 may further include a storage module (not shown in FIG. 11), configured to store program instructions and data.

In some embodiments, the transceiver module 1102 may also be referred to as a transceiver unit, and is configured to implement a sending function and/or a receiving function. The transceiver module 1102 may include a transceiver circuit, a transceiver machine, a transceiver, or a communication interface.

In some embodiments, the transceiver module 1102 may include a receiving module and a sending module, respectively configured to perform receiving and sending steps performed by the access network device in the foregoing method embodiments, and/or configured to support another process of the technology described in this specification. The processing module 1101 may be configured to perform a processing (for example, determining and generating) step performed by the access network device in the foregoing method embodiments, and/or configured to support another process of the technology described in this specification.

In a possible implementation,
the processing module 1101 is configured to determine to enable a first reflective QoS manner; the processing module 1101 is further configured to determine a first rule in the first reflective QoS manner, where the first rule includes a QoS rule and/or a QoS flow to data radio bearer DRB mapping rule; and the processing module 1101 is further configured to identify classification information of a packet in the first reflective QoS manner, where the classification information is for distinguishing between packets in a same internet protocol IP flow.

Optionally, a parameter in the first rule includes the classification information, or the first rule corresponds to one or more types of packets in the same IP flow.

Optionally, the transceiver module 1102 is configured to receive first indication information and/or second indication information from a network device. The first indication information indicates to notify a non-access stratum NAS of an update of a service data flow SDF to QoS flow mapping rule, and the second indication information indicates to update the QoS flow to DRB mapping rule.

Optionally, that the processing module 1101 is configured to determine to enable a first reflective QoS manner includes: The processing module 1101 is configured to determine, based on a first packet from the network device, to enable the first reflective QoS manner.

Optionally, the first packet includes third indication information. The third indication information indicates the terminal device to determine the first rule in the first reflective QoS manner, and/or the third indication information indicates that the first packet is a packet of a first QoS type.

Optionally, a value of an information element associated with the first packet is a specific value, and the information element includes at least one of the following: a QoS flow identifier QFI, a DRB identifier, a network slice identifier, a data network name, a logical channel identifier, a logical channel group identifier, or an IP flow identifier.

Optionally, that the processing module 1101 is configured to determine to enable a first reflective QoS manner includes: The processing module 1101 is configured to determine, based on fourth indication information from the network device, to enable the first reflective QoS manner, where the fourth indication information indicates the terminal device to determine the first rule for a first information element in the first reflective QoS manner, and the information element includes at least one of the following: a QFI, a DRB identifier, a network slice identifier, a data network name, a logical channel identifier, a logical channel group identifier, or an IP flow identifier.

Optionally, the fourth indication information includes a first field and a second field, the first field is for carrying the first information element, and the second field indicates the terminal device to determine the first rule in the first reflective QoS manner; or
the fourth indication information includes a third field, the third field is for carrying the first information element, and the third field further indicates the terminal device to determine the first rule in the first reflective QoS manner; or
the fourth indication information includes a fourth field, and the fourth field indicates the terminal device to determine the first rule in the first reflective QoS manner.

Optionally, the fourth indication information is carried in at least one of the following: a service data adaptation protocol SDAP control protocol data unit PDU, a media access control control element MAC CE, downlink control information DCI, a non-access stratum NAS message, a radio resource control RRC message, a PDCP control PDU, or other signaling or another control element.

Optionally, the classification information includes at least one of the following: a type of the packet, an importance level of the packet, a flag bit indicating whether to allow discarding of the packet, a type of a PDU set to which the packet belongs, an importance level of the PDU set to which the packet belongs, or a flag bit indicating whether to allow discarding of the PDU set to which the packet belongs.

Optionally, the classification information of the packet is carried in the packet.

Optionally, the transceiver module 1102 is further configured to send a second packet to the network device according to a second rule, where the second rule includes at least one of the following: An important packet is repeatedly sent for a plurality of times, important information is carried in first N packets or last M packets of the PDU set, or an important packet includes fifth indication information, where the fifth indication information indicates the network device to reply whether the important packet is correctly received, and N and M are positive integers.

Optionally, the important packet includes at least one of the following: a 1^{st} packet of a PDU set, a last packet of the PDU set, a packet carrying a PDU set boundary indication, a packet carrying a total size of the PDU set, a packet that is not allowed to be discarded, a packet of an I-frame, or a packet carrying important information.

Optionally, the important information includes at least one of the following: information indicating the total size of the PDU set, number information of the PDU set, a type identifier of the PDU set, information indicating a PDU set boundary, or information indicating an association relationship between a plurality of PDU sets.

In another possible implementation,
the transceiver module 1102 is configured to receive a first packet, and the processing module 1101 is configured to: when the first packet includes third indication information, determine a first rule in a first reflective QoS manner.

The third indication information indicates the terminal device to determine the first rule in the first reflective QoS manner, and/or indicates that the first packet is a packet of a first QoS type. The first rule includes a QoS rule and/or a QoS flow to DRB mapping rule. The terminal device identifies classification information of a packet in the first reflective QoS manner, where the classification information is for distinguishing between packets in a same IP flow.

In still another possible implementation,
the transceiver module 1102 is configured to receive a first packet, and the processing module 1101 is configured to: when a value of an information element associated with the first packet is a specific value, determine a first rule in a first reflective QoS manner.

The first rule includes a QoS rule and/or a QoS flow to DRB mapping rule. The terminal device identifies classification information of a packet in the first reflective QoS manner, where the classification information is for distinguishing between packets in a same IP flow. The information element includes at least one of the following: a QoS flow identifier QFI, a DRB identifier, a network slice identifier, a data network name, a logical channel identifier, a logical channel group identifier, or an IP flow identifier.

In yet another possible implementation,
the transceiver module 1102 is configured to receive a first packet, and the processing module 1101 is configured to: when an information element associated with the first packet is a first information element, determine a first rule in a first reflective QoS manner.

The first rule includes a QoS rule and/or a QoS flow to DRB mapping rule. The terminal device identifies classification information of a packet in the first reflective QoS manner, where the classification information is for distinguishing between packets in a same IP flow. The information element includes at least one of the following: a QoS flow identifier QFI, a DRB identifier, a network slice identifier, a data network name, a logical channel identifier, a logical channel group identifier, or an IP flow identifier.

Optionally, the transceiver module 1102 is further configured to receive fourth indication information from the network device, where the fourth indication information indicates the terminal device to determine the first rule for the first information element in the first reflective QoS manner.

All related content of the steps in the foregoing method embodiments may be cited in function descriptions of corresponding functional modules. Details are not described herein again.

In this application, the terminal device 110 is presented in a form of function modules obtained through division in an integrated manner. The "module" herein may be an application-specific integrated circuit (application-specific integrated circuit, ASIC), a circuit, a processor and a memory that execute one or more software or firmware programs, an integrated logic circuit, and/or another device that can provide the foregoing functions.

In some embodiments, in terms of hardware implementation, a person skilled in the art may figure out that the terminal device 110 may be in a form of the communication apparatus 300 shown in FIG. 3.

In an example, a function/implementation process of the processing module 1101 in FIG. 11 may be implemented by the processor 301 in the communication apparatus 300 shown in FIG. 3 by invoking the computer-executable instructions stored in the memory 303. A function/implementation process of the transceiver module 1102 in FIG. 11 may be implemented through the communication interface 304 in the communication apparatus 300 shown in FIG. 3.

In some embodiments, when the terminal device 110 in FIG. 11 is a chip or a chip system, a function/implementation process of the transceiver module 1102 may be implemented through an input/output interface (or a communication interface) of the chip or the chip system, and a function/implementation process of the processing module 1101 may be implemented by a processor (or a processing circuit) of the chip or the chip system.

Because the terminal device 110 provided in this embodiment may perform the foregoing method, for technical effects that can be obtained by the terminal device 110, refer to the foregoing method embodiment. Details are not described herein again.

Optionally, an example in which the communication apparatus is the network device in the foregoing method embodiment is used. FIG. 12 is a diagram of a structure of a network device 120. The network device 120 includes a processing module 1201 and a transceiver module 1202.

In some embodiments, the network device 120 may further include a storage module (not shown in FIG. 12), configured to store program instructions and data.

In some embodiments, the transceiver module 1202 may also be referred to as a transceiver unit, and is configured to implement a sending function and/or a receiving function. The transceiver module 1202 may include a transceiver circuit, a transceiver machine, a transceiver, or a communication interface.

In some embodiments, the transceiver module 1202 may include a receiving module and a sending module, respectively configured to perform receiving and sending steps performed by the access network device in the foregoing method embodiments, and/or configured to support another process of the technology described in this specification. The processing module 1201 may be configured to perform a processing (for example, determining and generating) step performed by the access network device in the foregoing method embodiments, and/or configured to support another process of the technology described in this specification.

In a possible implementation,
the processing module 1201 is configured to generate a first packet, and the transceiver module 1202 is configured to send the first packet to a terminal device, where the first packet includes third indication information. The third indication information indicates the terminal device to determine a first rule in a first reflective QoS manner, and/or the third indication information indicates that the first packet is a packet of a first QoS type. The first rule includes a QoS rule and/or a QoS flow to DRB mapping rule, the first reflective QoS manner indicates the terminal device to identify classification information of a packet, and the classification information is for distinguishing between packets in a same internet protocol IP flow.

In another possible implementation,
the processing module 1201 is configured to generate fourth indication information, and the transceiver module 1202 is configured to send the fourth indication information to a terminal device, where the fourth indication information indicates the terminal device to determine a first rule for a first information element in a first reflective QoS manner, the first rule includes a QoS rule and/or a QoS flow to DRB mapping rule, the first reflective QoS manner indicates the terminal device to identify classification information of a packet, and the classification information is for distinguishing between packets in a same internet protocol IP flow. The information element includes at least one of the following: a QFI, a DRB identifier, a network slice identifier, a data network name, a logical channel identifier, a logical channel group identifier, or an IP flow identifier.

Optionally, the fourth indication information includes a first field and a second field, the first field is for carrying the first information element, and the second field indicates the terminal device to determine the first rule in the first reflective QoS manner, or
the fourth indication information includes a third field, the third field is for carrying the first information element, and the third field further indicates the terminal device to determine the first rule in the first reflective QoS manner; or
the fourth indication information includes a fourth field, and the fourth field indicates the terminal device to determine the first rule in the first reflective QoS manner.

Optionally, the fourth indication information is carried in at least one of the following: a service data adaptation protocol SDAP control protocol data unit PDU, a media access control control element MAC CE, downlink control information DCI, a non-access stratum NAS message, a radio resource control RRC message, a PDCP control PDU, or other signaling or another control element.

Optionally, the classification information includes at least one of the following: a type of the packet, an importance level of the packet, a flag bit indicating whether to allow discarding of the packet, a type of a PDU set to which the packet belongs, an importance level of the PDU set to which the packet belongs, or a flag bit indicating whether to allow discarding of the PDU set to which the packet belongs.

Optionally, the classification information of the packet is carried in the packet.

Optionally, the transceiver module 1202 is further configured to receive a second packet from the terminal device, where the second packet includes fifth indication information, and the fifth indication information indicates the network device to reply whether the second packet is correctly received. The transceiver module 1202 is further configured to send sixth indication information to the terminal device, where the sixth indication information indicates that the second packet is correctly received.

All related content of the steps in the foregoing method embodiments may be cited in function descriptions of corresponding functional modules. Details are not described herein again.

In this application, the network device 120 is presented in a form of function modules obtained through division in an integrated manner. The "module" herein may be an application-specific integrated circuit (application-specific integrated circuit, ASIC), a circuit, a processor and a memory that execute one or more software or firmware programs, an integrated logic circuit, and/or another device that can provide the foregoing functions.

In some embodiments, in terms of hardware implementation, a person skilled in the art may figure out that the network device 120 may be in a form of the communication apparatus 300 shown in FIG. 3.

In an example, a function/implementation process of the processing module 1201 in FIG. 12 may be implemented by the processor 301 in the communication apparatus 300 shown in FIG. 3 by invoking the computer-executable instructions stored in the memory 303. A function/implementation process of the transceiver module 1202 in FIG. 12 may be implemented through the communication interface 304 in the communication apparatus 300 shown in FIG. 3.

In some embodiments, when the network device 120 in FIG. 12 is a chip or a chip system, a function/implementation process of the transceiver module 1202 may be implemented through an input/output interface (or a communication interface) of the chip or the chip system, and a function/implementation process of the processing module 1201 may be implemented by a processor (or a processing circuit) of the chip or the chip system.

Because the network device 120 provided in this embodiment may perform the foregoing method, for technical effects that can be obtained by the network device 120, refer to the foregoing method embodiment. Details are not described herein again.

In a possible product form, the access network device or the terminal device in embodiments of this application may be implemented by using one or more field programmable gate arrays (field programmable gate arrays, FPGAs), a programmable logic device (programmable logic device, PLD), a controller, a state machine, a logic gate, a discrete hardware component, any other appropriate circuit, or any combination of circuits that can perform various functions described in this application.

In another possible product form, the terminal device or the network device in embodiments of this application may be implemented by using a general bus architecture. For ease of description, refer to FIG. 13. FIG. 13 is a diagram of a structure of a communication apparatus 1300 according to an embodiment of this application. The communication apparatus 1300 includes a processor 1301 and a transceiver 1302. The communication apparatus 1300 may be a terminal device or a chip in the terminal device; or the communication apparatus 1300 may be a network device or a chip or a module in the network device. FIG. 13 shows only main components of the communication apparatus 1300. In addition to the processor 1301 and the transceiver 1302, the communication apparatus may further include a memory 1303 and an input/output apparatus (not shown in the figure).

Optionally, the processor 1301 is mainly configured to process a communication protocol and communication data, control the entire communication apparatus, execute a software program, and process data of the software program. The memory 1303 is mainly configured to store a software program and data. The transceiver 1302 may include a radio frequency circuit and an antenna. The radio frequency circuit is mainly configured to perform conversion between a baseband signal and a radio frequency signal, and process the radio frequency signal. The antenna is mainly configured to receive and send a radio frequency signal in an electromagnetic wave form. The input/output apparatus, such as a touchscreen, a display, or a keyboard, is mainly configured to receive data input by a user and output data to the user.

Optionally, the processor 1301, the transceiver 1302, and the memory 1303 may be connected through a communication bus.

After the communication apparatus is powered on, the processor 1301 may read the software program in the memory 1303, interpret and execute instructions of the software program, and process data of the software program. When data needs to be sent wirelessly, the processor 1301 performs baseband processing on the to-be-sent data, and then outputs a baseband signal to the radio frequency circuit. The radio frequency circuit performs radio frequency processing on the baseband signal, and then sends the radio frequency signal in an electromagnetic wave form through the antenna. When data is sent to the communication apparatus, the radio frequency circuit receives a radio frequency signal through the antenna, converts the radio frequency signal into a baseband signal, and outputs the baseband signal to the processor 1301. The processor 1301 converts the baseband signal into data, and processes the data.

In another implementation, the radio frequency circuit and the antenna may be disposed independently of the processor that performs baseband processing. For example, in a distributed scenario, the radio frequency circuit and the antenna may be remotely disposed independent of the communication apparatus.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any one of the foregoing method embodiments. Certainly, the communication apparatus may not include a memory.

In another possible implementation, the communication apparatus further includes an interface circuit. The interface circuit is a code/data read/write interface circuit, and the interface circuit is configured to receive computer-executable instructions (the computer-executable instructions are stored in a memory, and may be directly read from the memory, or may be read via another component) and send the computer-executable instructions to the processor.

In still another possible implementation, the communication apparatus further includes a communication interface, and the communication interface is configured to communicate with a module other than the communication apparatus.

It may be understood that the communication apparatus may be a chip or a chip system. When the communication apparatus is the chip system, the communication apparatus may include a chip, or may include the chip and another discrete component. This is not specifically limited in embodiments of this application.

This application further provides a computer-readable storage medium. The computer-readable storage medium stores a computer program or instructions. When the computer program or the instructions are executed by a computer, a function in any one of the foregoing method embodiments is implemented.

This application further provides a computer program product. When the computer program product is executed by a computer, a function in any one of the foregoing method embodiments is implemented.

A person of ordinary skill in the art may understand that, for the purpose of convenient and brief description, for a specific working process of the foregoing system, apparatus, and unit, refer to a corresponding process in the foregoing method embodiments. Details are not described herein again.

It may be understood that the system, the apparatus, and the method described in this application may alternatively be implemented in other manners. For example, the described apparatus embodiments are merely examples. For example, division into the units is merely logical function division. During actual implementation, another division manner may be used. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic, a mechanical, or another form.

The units described as separate parts may be physically separated or not, in other words, may be located in one place, or may be distributed on a plurality of network units. Parts displayed as units may be or may be not physical units. A part or all of the units may be selected based on an actual requirement to achieve objectives of the solutions of embodiments.

In addition, functional units in embodiments of this application may be integrated into one processing unit, or each unit may exist alone physically, or two or more units are integrated into one unit.

All or a part of the foregoing embodiments may be implemented by using software, hardware, firmware, or any combination thereof. When a software program is used to implement the embodiments, all or a part of the embodiments may be implemented in a form of a computer program product. The computer program product includes one or more computer instructions. When the computer program instructions are loaded and executed on a computer, all or a part of procedures (or functions) described in embodiments of this application are implemented. The computer may be a general-purpose computer, a dedicated computer, a computer network, or another programmable apparatus. The computer instructions may be stored in a computer-readable storage medium, or may be transmitted from a computer-readable storage medium to another readable storage medium. For example, the computer instructions may be transmitted from a website, a computer, a server, or a data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state drive (solid state drive, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a case of multiple. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example descriptions of this application defined by the accompanying claims, and are considered as any of or all modifications, variations, combinations or equivalents that cover the scope of this application. It is clear that a person skilled in the art can make various modifications and variations to this application without departing from the spirit and scope of this application. In this case, this application is intended to cover these modifications and variations of this application provided that they fall within the scope of protection defined by the following claims and their equivalent technologies.

## Claims

1. A reflective quality of service QoS method, wherein the method comprises:
determining, by a terminal device, to enable a first reflective QoS manner; and
determining a first rule in the first reflective QoS manner, wherein the first rule comprises a QoS rule and/or a QoS flow to data radio bearer DRB mapping rule, wherein
the terminal device identifies classification information of a packet in the first reflective QoS manner, and the classification information is for distinguishing between packets in a same internet protocol IP flow.

2. The method according to claim 1, wherein a parameter in the first rule comprises the classification information, or the first rule corresponds to one or more types of packets in the same IP flow.

3. The method according to claim 1 or 2, wherein the method further comprises: receiving first indication information and/or second indication information from a network device, wherein
the first indication information indicates to notify a non-access stratum NAS of an update of a service data flow SDF to QoS flow mapping rule; and
the second indication information indicates to update the QoS flow to DRB mapping rule.

4. The method according to any one of claims 1 to 3, wherein the determining to enable a first reflective QoS manner comprises:
determining, based on a first packet from the network device, to enable the first reflective QoS manner.

5. The method according to claim 4, wherein the first packet comprises third indication information, wherein the third indication information indicates the terminal device to determine the first rule in the first reflective QoS manner, and/or the third indication information indicates that the first packet is a packet of a first QoS type.

6. The method according to claim 4, wherein a value of an information element associated with the first packet is a specific value, and the information element comprises at least one of the following: a QoS flow identifier QFI, a DRB identifier, a network slice identifier, a data network name, a logical channel identifier, a logical channel group identifier, or an IP flow identifier.

7. The method according to any one of claims 1 to 3, wherein the determining to enable a first reflective QoS manner comprises:
determining, based on fourth indication information from the network device, to enable the first reflective QoS manner, wherein the fourth indication information indicates the terminal device to determine the first rule for a first information element in the first reflective QoS manner, and the information element comprises at least one of the following: a QFI, a DRB identifier, a network slice identifier, a data network name, a logical channel identifier, a logical channel group identifier, or an IP flow identifier.

8. The method according to claim 7, wherein
the fourth indication information comprises a first field and a second field, the first field is for carrying the first information element, and the second field indicates the terminal device to determine the first rule in the first reflective QoS manner; or
the fourth indication information comprises a third field, the third field is for carrying the first information element, and the third field further indicates the terminal device to determine the first rule in the first reflective QoS manner; or
the fourth indication information comprises a fourth field, and the fourth field indicates the terminal device to determine the first rule in the first reflective QoS manner.

9. The method according to claim 7 or 8, wherein the fourth indication information is carried in at least one of the following:
a service data adaptation protocol SDAP control protocol data unit PDU, a media access control control element MAC CE, downlink control information DCI, a non-access stratum NAS message, a packet data convergence protocol PDCP control PDU, or a radio resource control RRC message.

10. The method according to any one of claims 1 to 9, wherein the classification information comprises at least one of the following: a type of the packet, an importance level of the packet, a flag bit indicating whether to allow discarding of the packet, a type of a PDU set to which the packet belongs, an importance level of the PDU set to which the packet belongs, or a flag bit indicating whether to allow discarding of the PDU set to which the packet belongs.

11. The method according to any one of claims 1 to 10, wherein the classification information of the packet is carried in the packet.

12. The method according to any one of claims 1 to 11, wherein the method further comprises: sending a second packet to the network device according to a second rule, wherein the second rule comprises at least one of the following:
an important packet is repeatedly sent for a plurality of times, important information is carried in first N packets or last M packets of the PDU set, or an important packet comprises fifth indication information, wherein the fifth indication information indicates the network device to reply whether the important packet is correctly received, and N and M are positive integers.

13. The method according to claim 12, wherein the important packet comprises at least one of the following: a 1^{st} packet of a PDU set, a last packet of the PDU set, a packet carrying a PDU set boundary indication, a packet carrying a total size of the PDU set, a packet that is not allowed to be discarded, or a packet carrying important information; and
the important information comprises at least one of the following: information indicating the total size of the PDU set, number information of the PDU set, a type identifier of the PDU set, information indicating a PDU set boundary, or information indicating an association relationship between a plurality of PDU sets.

14. A reflective quality of service QoS method, wherein the method comprises:
generating, by a network device, a first packet; and
sending the first packet to a terminal device, wherein the first packet comprises third indication information, wherein the third indication information indicates the terminal device to determine a first rule in a first reflective QoS manner, and/or the third indication information indicates that the first packet is a packet of a first QoS type, wherein
the first rule comprises a QoS rule and/or a QoS flow to DRB mapping rule, the first reflective QoS manner indicates the terminal device to identify classification information of a packet, and the classification information is for distinguishing between packets in a same internet protocol IP flow.

15. A reflective quality of service QoS method, wherein the method comprises:
generating, by a network device, fourth indication information; and
sending the fourth indication information to a terminal device, wherein the fourth indication information indicates the terminal device to determine a first rule for a first information element in a first reflective QoS manner, the first rule comprises a QoS rule and/or a QoS flow to DRB mapping rule, the first reflective QoS manner indicates the terminal device to identify classification information of a packet, and the classification information is for distinguishing between packets in a same internet protocol IP flow, wherein
the information element comprises at least one of the following: a QFI, a DRB identifier, a network slice identifier, a data network name, a logical channel identifier, a logical channel group identifier, or an IP flow identifier.

16. The method according to claim 15, wherein
the fourth indication information comprises a first field and a second field, the first field is for carrying the first information element, and the second field indicates the terminal device to determine the first rule in the first reflective QoS manner; or
the fourth indication information comprises a third field, the third field is for carrying the first information element, and the third field further indicates the terminal device to determine the first rule in the first reflective QoS manner; or
the fourth indication information comprises a fourth field, and the fourth field indicates the terminal device to determine the first rule in the first reflective QoS manner.

17. The method according to claim 15 or 16, wherein the fourth indication information is carried in at least one of the following:
a service data adaptation protocol SDAP control protocol data unit PDU, a media access control control element MAC CE, downlink control information DCI, a non-access stratum NAS message, a packet data convergence protocol PDCP control PDU, or a radio resource control RRC message.

18. The method according to any one of claims 14 to 17, wherein the classification information comprises at least one of the following: a type of the packet, an importance level of the packet, a flag bit indicating whether to allow discarding of the packet, a type of a PDU set to which the packet belongs, an importance level of the PDU set to which the packet belongs, or a flag bit indicating whether to allow discarding of the PDU set to which the packet belongs.

19. The method according to any one of claims 14 to 18, wherein the classification information of the packet is carried in the packet.

20. The method according to any one of claims 14 to 19, wherein the method further comprises:
receiving a second packet from the terminal device, wherein the second packet comprises fifth indication information, and the fifth indication information indicates the network device to reply whether the second packet is correctly received; and
sending sixth indication information to the terminal device, wherein the sixth indication information indicates that the second packet is correctly received.

21. A communication apparatus, wherein the communication apparatus comprises a processing module, wherein
the processing module is configured to determine to enable a first reflective quality of service QoS manner;
the processing module is further configured to determine a first rule in the first reflective QoS manner, wherein the first rule comprises a QoS rule and/or a QoS flow to data radio bearer DRB mapping rule; and
the processing module is further configured to identify classification information of a packet in the first reflective QoS manner, wherein the classification information is for distinguishing between packets in a same internet protocol IP flow.

22. A communication apparatus, wherein the communication apparatus comprises a processing module and a transceiver module, wherein
the processing module is configured to generate a first packet; and
the transceiver module is configured to send the first packet to a terminal device, wherein the first packet comprises third indication information, wherein the third indication information indicates the terminal device to determine a first rule in a first reflective QoS manner, and/or the third indication information indicates that the first packet is a packet of a first QoS type, wherein
the first rule comprises a QoS rule and/or a QoS flow to DRB mapping rule, the first reflective QoS manner indicates the terminal device to identify classification information of a packet, and the classification information is for distinguishing between packets in a same internet protocol IP flow.

23. A communication apparatus, wherein the communication apparatus comprises a processing module and a transceiver module, wherein
the processing module is configured to generate fourth indication information, and
the transceiver module is configured to send the fourth indication information to a terminal device, wherein the fourth indication information indicates the terminal device to determine a first rule for a first information element in a first reflective QoS manner, the first rule comprises a QoS rule and/or a QoS flow to DRB mapping rule, the first reflective QoS manner indicates the terminal device to identify classification information of a packet, and the classification information is for distinguishing between packets in a same internet protocol IP flow, wherein
the information element comprises at least one of the following: a QFI, a DRB identifier, a network slice identifier, a data network name, a logical channel identifier, a logical channel group identifier, or an IP flow identifier.

24. A communication apparatus, wherein the communication apparatus comprises a processor, and the processor is configured to run a computer program or instructions, to enable the communication apparatus to perform the method according to any one of claims 1 to 13.

25. A communication apparatus, wherein the communication apparatus comprises a processor, and the processor is configured to run a computer program or instructions, to enable the communication apparatus to perform the method according to any one of claims 14 to 20.

26. A computer-readable storage medium, wherein the computer-readable storage medium stores computer instructions or a program, and when the computer instructions or the program is run on a computer, the method according to any one of claims 1 to 13 is performed.

27. A computer-readable storage medium, wherein the computer-readable storage medium stores computer instructions or a program, and when the computer instructions or the program is run on a computer, the method according to any one of claims 14 to 20 is performed.

28. A computer program product, wherein the computer program product comprises computer instructions, and when a part or all of the computer instructions are run on a computer, the method according to any one of claims 1 to 13 is performed.

29. A computer program product, wherein the computer program product comprises computer instructions, and when a part or all of the computer instructions are run on a computer, the method according to any one of claims 14 to 20 is performed.

30. A communication system, wherein the communication system comprises the communication apparatus according to claim 24 and the communication apparatus according to claim 25.
